# EUROPEAN PATENT SPECIFICATION

(11) **EP 2 726 519 B1**
(45) Date of publication and mention of the grant of the patent: **27.02.2019**
(21) Application number: 12735998.2
(22) Date of filing: 29.06.2012
(51) Int. Cl.: C08F 16/06, C08F 8/14, C08F 8/00, C09D 129/04, C09D 143/04, C09D 11/10, C08K 5/544

(54) **FUNCTIONALIZED HOMOPOLYMERS OR COPOLYMERS OF VINYL ALCOHOLS AND INK AND COATING COMPOSITIONS FOR PACKAGING APPLICATIONS INCLUDING THEM**
TINTE UND BESCHICHTUNGSZUSAMMENSETZUNGEN FÜR VERPACKUNGSANWENDUNGEN EINSCHLIESSLICH FUNKTIONALISIERTER HOMOPOLYMERE ODER COPOLYMERE AUS VINYLALKOHOLEN
COMPOSITIONS D'ENCRE ET DE REVÊTEMENT POUR APPLICATIONS D'EMBALLAGE COMPRENANT DES HOMOPOLYMÈRES OU DES COPOLYMÈRES FONCTIONNALISÉS D'ALCOOLS VINYLIQUES

(30) Priority: 29.06.2011 US 201161502358 P
(43) Date of publication of application: 07.05.2014
(73) Proprietor: Sun Chemical Corporation, Parsippany, NJ 07054 (US)
(72) Inventor: ILLSLEY, Derek, Ronald, Kent ME17 4QJ (GB)
(74) Representative: Abel & Imray
(86) International application number: PCT/US2012/044834
(87) International publication number: WO 2013/003682

(56) References cited:
- DATABASE WPI Week 200426 Thomson Scientific, London, GB; AN 2004-272503 XP002684487, -& JP 2003 171600 A (KYODO PRINTING CO LTD) 20 June 2003 (2003-06-20)
- DATABASE WPI Week 200630 Thomson Scientific, London, GB; AN 2006-287228 XP002684488, -& JP 2006 096797 A (DAINIPPON INK & CHEM INC) 13 April 2006 (2006-04-13)
- DATABASE WPI Week 199804 Thomson Scientific, London, GB; AN 1998-037124 XP002684489, -& JP 9 291185 A (NIPPON SYNTHETIC CHEM IND CO) 11 November 1997 (1997-11-11) cited in the application
- DATABASE CA [Online] CHEMICAL ABSTRACTS SERVICE, COLUMBUS, OHIO, US; MATSUMOTO, SHINICHIRO: "Thermal printing material with protective layer", XP002684490, retrieved from STN Database accession no. 2009:234135 -& JP 2009 039874 A (MITSUBISHI PAPER MILLS, LTD., JAPAN) 26 February 2009 (2009-02-26)

## Description

### BACKGROUND OF THE INVENTION

### Field of the Invention

Generally, the present invention is directed to ink and coating compositions exhibiting improved gas barrier performance and/or bond strength characteristics. The present invention also is directed to laminated packages including the above-mentioned inks and coatings. The present invention also is directed to novel polymer composition including functionalized vinyl alcohols, functionalized homopolymer or copolymer of vinyl alcohol. The present invention further is directed to the use of the above-mentioned inks and coatings in flexible or rigid packaging applications including but not limited to foods, pharmaceuticals and specialty chemicals.

### Description of the Related Art

Gases, vapors and chemicals are prone to permeation through thermoplastic resin layers when subjected to varying environmental conditions such as temperature and humidity. Undesired deterioration of the thermoplastic resin layer as well as contamination of the packaged contents may result. To prevent or significantly reduce permeation, protective films are generally applied to one or more thermoplastic resin layers.

Protective films may include several layers. At least one of these layers includes a barrier layer. Barrier layers slow the ingress and/or egress of gases, such as oxygen and carbon dioxide, as well as moisture, which could otherwise cause spoilage or degradation of the packaged contents. Polyvinyl alcohols are commonly used as the barrier layer. Diffusing species such as oxygen are poorly soluble in PVOH polymers. In addition, hydrogen bonding between alcohol groups in PVOH polymers result in highly ordered structures with a high degree of crystallinity and high melting point. These structures make it difficult for small molecules to pass through

To further improve oxygen barrier properties of the barrier layer, inorganic filler particles may be added in selected amounts. More often than not, high aspect ratio fillers, *i*.*e*., greater than about 25, are employed. Aspect ratios are defined as the product of the lateral dimension divided by the thickness. While barrier layers comprising high aspect ratio fillers such as, for example vermiculites, blended with polymers provide excellent oxygen barrier properties, adhesive bond strength remains poor at high temperatures and/or high humidity.

JP 2003-171600 discloses gas-barrier coating compositions comprising (A) a polyvinyl alcohol containing an acetoacetyl group and (B) an alkoxysilane bearing an amino group as separate components. Other compositions comprising polyvinyl acohols and separate silane coupling agents are disclosed in JP 2006-096797, JP H09-291185 and JP 2009-039874.

What is desired in the field is an ink or coating composition exhibiting excellent gas barrier properties in low and high humidity environments over time.

Also desired is an ink or coating composition exhibiting superior bond strength at low and high humidity environments over time.

Further a laminated package employing the above-mentioned ink or coating compositions is desired.

### SUMMARY OF THE INVENTION

It has surprisingly been conceived by the inventors that their ink and coating compositions exhibit improved oxygen barrier properties and bond strength characteristics. This is especially important in environments where the relative humidity exceeds 50%. In an exemplary embodiment, the ink and coating compositions are employed as barrier layers in laminated packages. These laminated packages are used in flexible or rigid packaging applications including but not limited to carrying foods, pharmaceuticals, and specialty chemicals.

One of the many advantages of the present invention is the occurrence of reduced oxygen transmission through a substrate. By so doing, spoilage and degradation of the packaged contents can be slowed or prevented. In one example, modified atmosphere packaging "MAP" including controlled blends of nitrogen gas and carbon dioxide are useful in barrier layers for protecting against oxygen transmission. Another advantage of the ink and coating compositions of the present invention is their improved laminate bond strength at low and high humidity. Yet another advantage of the present invention is the absence of chlorinated materials in the inks and coatings. A further advantage of the present invention is that a primer is not required to be applied to the plastic substrate prior to the coatings for adhesively laminated structures.

In an embodiment, there is described an ink or coating composition, according to claim 1, comprising functionalized homopolymers and copolymers of vinyl alcohols comprising one or more aminosilane- and/or aminosilanol containing side chains attached to the polymer backbone via a reactive coupling group. The composition also contains an inorganic filler, in particular those with high aspect ratios. In another embodiment, there is described a process for preparing the ink or coating compositions described in the present invention.

In yet another embodiment, there is described a cured laminated package, according to claim 12, including the inks or coatings according to the present invention. The laminated packages may be flexible or rigid and used in applications including but not limited to food, pharmaceuticals and specialty chemicals. In yet even another embodiment, there is described a method for making a laminated package including the ink or coating compositions according to the present invention.

Additional features and advantages of the present invention will be set forth in the description which follows, and in part will be apparent from the description, or may be learned by practice of the invention. The advantages of the invention will be realized and attained by the structure particularly pointed out in the written description and claims hereof as well as the appended drawings.

### BRIEF DESCRIPTION OF THE DRAWINGS

The accompanying drawings, which are included to provide a further understanding of the invention and are incorporated in and constitute a part of this specification, illustrate embodiments of the invention and together with the description serve to explain the principles of the invention.

### In the Drawings:

**Figure 1** illustrates laminate bond strength for different polymer materials.
**Figure 2** illustrates oxygen transmission rate versus relative humidity for a plurality of coating compositions.

### DETAILED DESCRIPTION OF THE INVENTION

Reference will now be made in detail to the embodiments of the present invention, and examples of which are illustrated in the accompanying drawings.

The inventors of the present invention have conceived of novel functionalized polymers used in ink and coating compositions. Such ink and coating compositions are useful in packaging applications. The ink and coating compositions generally are defined as being gas barrier coatings especially for withstanding permeation of oxygen. The terms "inks" and "coatings" are both used in the present application. Applicants wish to make it clear that the present application is meant to encompass both inks, and coatings, even if it isn't explicitly stated as such in the text. The coating compositions of the present invention comprise one or more functionalized homopolymers and copolymers of vinyl alcohol, and one or more aminosilane- and/or aminosilanol containing side chains attached to the polymer backbone via a reactive coupling group. As used herein, the term "reactive coupling group" means any chemical group attached to the polymer backbone that is capable of forming a bond with an aminosilane- and/or aminosilanol containing side chain suitable for use in the ink or coating composition for use in rigid, flexible food and industrial packaging. The polymer of the coating composition may further contain a monomer such as an olefin, vinylic monomer, acetoacetoxyethyl, methacrylates, diacetone acrylamides and combinations thereof. The coating composition includes functionalized homopolymers and copolymers in addition to filler particles. The filler may be inorganic. The filler may also include high aspect ratio minerals. The fillers are generally dispersed in the coating composition, *e*.*g*., barrier layer, in an amount to show enhancement of the oxygen barrier property compared with coating compositions free of such fillers.

One of the many benefits of the instant ink and coating compositions in relation to those known in the art is the PVOH/EVOH polymer backbones bearing the silane-functionality achieved by imine formation between the pendant keto-ester group and aminosilane. As provided in more detail below, the compositions exhibit excellent laminate bond strength at low and high humidity, *e*.*g*., moisture levels, when applied onto a range of flexible plastic films. Yet another advantage of coating compositions according to the present invention is maintaining bond strengths even when immersed in a body of water.

According to the inventors, it is understood the ink and coating compositions described in the present invention are barrier layers formed by reacting a functionalised homopolymer, copolymer or a combination thereof of vinyl alcohol of formula (I):

P-(R)ₙ (I)

wherein, the term, 'P' represents a straight or branched chain polymer backbone including a homopolymer, a copolymer or combination thereof of vinyl alcohol, and a reactive coupling group. The term 'R' represents an aminosilane- and/or aminosilanol-containing side chain attached to the polymer backbone via the reactive coupling group(s). The term, n, represents the number of side chains, which are present in an amount from about 1 to about 25 mol% of the polymer backbone. In an exemplary embodiment thereof, the ink or coating composition comprises a polymer or copolymer such as PVOH and/or an EVOH, and acetoacetate reactive coupling group(s). The acetoacetate groups have been partially or fully reacted with amino silane and/or aminosilanol side chains attached to the backbone of the copolymer such as functional alkoxy silane. In a further exemplary embodiment, the coating composition includes a dispersed clay.

The inks and coatings have a solids content which exhibit viscosities suitable for gravure or flexographic printing. The viscosity of the inks or coatings can also be adjusted to allow for other coating processes. The solids content is generally made up of the amount of functionalized polymer including at least the total amount of silane-functional PVOH and/or EVOH, and any optionally added polymers, and any optionally added fillers. The concentration of filler and polymer in the solution will depend on at least the following: (i) solubility/dispersability; (ii) manner in which the coating is applied, e.g., gravure, flexo, curtain coating, roll coating, dip coating, spray, etc.; and (iii) the amount of solvent employed with the minimum needed to achieve sufficient flowability to adequately coat the substrate.

The overall solids content of the ink or coating composition ranges from 0.5 to 15% (w/w). The solids content of the coating composition may preferably be 2 to 8%. The solids content in (w/w) may be 0.5 %; 1%; 1.5%; 2%; 2.5%; 3.0%; 3.5%; 4.0%; 4.5%; 5.0%; 5.5%; 6.0; 6.5%; 7.0%; 7.5%; 8.0%; 8.5%; 9.0%; 9.5%; 10.0%; 10.5%; 11.0%; 11.5%; 12.0%; 12.5%; 13.0%; 13.5%; 14.0%; 14.5%; 15.0%.

30 to 95% (w/w) of the total solids content includes the functionalized polymer, the remainder being constituted of the mineral filler and any other components. Preferably, the range is 40 to 75% (w/w). More preferably, the range is 50 to 75% (w/w). The solids content (w/w) based on the total clay may be: 30%; 31%; 32%; 33%; 34%; 35%; 36%; 37%; 38%; 39%; 40%; 41%; 42%; 43%; 44%; 45%; 46%; 47%; 48%; 49%; 50%; 51%; 52%; 53%; 54%; 55%; 56%; 57%; 58%; 59%; 60%; 61%; 62%; 63%; 64%; 65%; 66%; 67%; 68%; 69%; 70%; 71%; 72%; 73%; 74%; 75%; 76%; 77%; 78%; 79%; 80%; 81%; 82%; 83%; 84%; 85%; 86%; 87%; 88%; 89%; and 90%.

According to the inventors, carefully controlling the ratio of either/both reactive coupling groups, *i.e*., ketoester groups, to the polymer backbone, and the aminosilane side chains to reactive coupling groups, results in superior adhesion characteristics, at various moisture levels contingent upon temperature and humidity, of the coating or ink composition when applied onto a predetermined substrate. Such results are assessed in view of coatings free of aminosilane functionalization.

As an example, there is disclosed a process for preparing the ink and coating compositions of the present invention. The compositions are produced by preparing aqueous solutions or dispersions of copolymers having a polyvinyl alcohol (PVOH), or ethylene vinyl alcohol (EVOH) polymer backbone (P), containing reactive coupling groups such as acetoacetyl groups which have been reacted with an alkoxy silane side chain (R) attached to the backbone of the copolymer having an amino group.

As an example, to produce the barrier coatings of the current invention, aqueous solutions of the silane-functional PVOH/EVOH are prepared, and then mixed with aqueous dispersions of clay. The silane-functional PVOH/EVOH is dissolved in an aqueous solvent, which may contain a water-miscible co-solvent. Preferred co-solvents are alcohols, in particular ethanol, n-propanol and iso-propanol. The term "aqueous solvent" as used herein, encompasses pure water and mixtures comprising water and one or more water-miscible co-solvents. Preferably, water constitutes the major part, for example at least 50% w/w of the aqueous solvent. Preferably, a water-miscible co-solvent constitutes less than 50% w/w of the solvent blend. More preferably, the co-solvent constitutes a maximum of 30% w/w of the total solvent blend (most preferably 5-30% w/w of the total solvent blend) and less than 20% w/w of the total formula.

It will be appreciated that the reaction process may be performed using any equipment capable of providing sufficient mixing. These may include reactors or other vessels where agitation is provided by an overhead stirrer, a magnetic stirrer, most preferably mixing is achieved using an appropriate extruder, z-blade mixer, batch mixer, U trough mixer, RT mixer, compounder, internal mixer, Banbury type mixer, two roll mill, Brabender type mixer, a wide blade mixer (or hydrofoil blade mixer), horizontal (delta or helical) blade mixer, kneader-reactor, or a related variation of one of these mixers such as such as a double z-blade mixer or twin screw extruder. Heat introduced to the system may be supplied by conventional means or from microwave radiation.

In yet another exemplary embodiment, there is described a cured laminated package including the above-mentioned ink or coating compositions. In one embodiment, the laminate is used for food packaging. For example, the food packaging may be for chilled or frozen foods. The food packaging may also be for foods stored at room temperature such as potato chips. In another embodiment, the laminate is used in industrial packaging, for example, cosmetics and pharmaceuticals. According to the inventors, such laminates provide surprising results with respect to laminate bond strength and oxygen barrier properties, particularly in high humidity environments.

One of the many benefits of the laminated package is the application of the ink or coating composition onto a broad range of plastic films, e.g., substrates, without requiring a primer layer. Thus, one laminate including the inventive ink or coating composition applied thereon may subsequently be fixed or to another laminate and still deliver bond strengths under varied conditions such as low and high humidity, water immersion, etc. Moreover, the laminated package in view of the ink and coating compositions exhibit excellent gas barrier performance even in high humidity environments. According to one of the experiments, the inventive inks and coatings achieve better characteristics when compared to a coextruded EVOH structure, at relative humidity (RH) greater than about 50%. Another advantage is the inventive inks and coatings do not require chlorinated materials. Hence, the toxicity concern associated with a conventional PVDC is overcome

The present invention also has been found suitable for use with flexible plastic film substrates. Flexible plastic film substrates generally have poor inherent oxygen barrier properties likely attributed to its elasticity characteristics. Generally, a laminate material, having no gas barrier layer, would typically has an oxygen transmission rate (OTR) of at least 50 cm³/m²/day at 23°C and 80% RH, especially at least 80 cm³/m²/day at 23°C and 80% RH, and in some cases at least 1000 cm³/m²/day at 23°C and 80% RH). On the other hand, when the novel ink and coating compositions are applied to one or more plastic film substrates, significantly improved gas barrier properties are observed even at increased relative humidity. For example, a preferable oxygen barrier is one of less than 20 cm³/m²/day, and even more preferable is an oxygen barrier of less than 10 cm³/m²/day, at 23°C and 80% RH.

In yet even a further exemplary embodiment, there is described a process for preparing laminated packages. An adhesive layer may directly be applied to a surface of a substrate. An ink or coating composition may be applied to a surface of another substrate. Alternatively, the adhesive layer may be applied onto the ink or coating on the surface of the plastic film. In one exemplary embodiment, the laminated package includes the gas barrier coating; an adhesive; and another plastics film. In another exemplary embodiment, additional layers composed of other materials may be interposed between any of the layers. In yet another exemplary embodiment, additional layers may formed on either side of the two flexible plastic film substrates having the ink or coating composition therebetween.

The ink and coating compositions will now be described in detail according to a first aspect of the present invention,. The ink and coating compositions, according to claim 1, least include a functionalized homopolymer or copolymer of vinyl alcohol of formula (I):

P-(R)ₙ (I)

wherein, 'P' represents a straight or branched chain polymer backbone which is a homopolymer of vinyl alcohol or a copolymer of vinyl alcohol and optionally at least one other monomer, said copolymer comprising one or more reactive coupling groups;
'R' represents an aminosilane- and/or aminosilanol containing side chain attached to the polymer backbone via the reactive coupling group(s); and 'n' represents the number of side chains, which are present in an amount from 1 to 25 mol% of the polymer backbone.

In another embodiment, when P represents a straight or branched chain polymer backbone which is a homopolymer of vinyl alcohol, R is not a side chain derived from 3-aminopropyltriethoxysilane.

There is no restriction on the nature of polyvinyl alcohol or ethylene-vinyl alcohol copolymer employed. Preferably, the degree of saponification should be greater than 70%, preferably more than 90%, and even more preferably more than 95%. In a preferred embodiment, the degree of saponification should be: 70%; 71%; 72%; 73%; 74%; 75%; 76%; 77%; 78%; 79%; 80%; 81%; 82%; 83%; 84%; 85%; 86%; 87%; 88%; 89 %; 90%; 91%; 92%; 93%; 94%; 95%; 96%; 97%; 98%; 99%; and 100%.

Particularly preferred are copolymers of ethylene and vinyl alcohol with concentrations less than 40 mol.%. Especially preferred copolymers have less than 30 mol.%, and even more preferred are those having less than 20 mol.%. Commercially available polymers of this type include the Exceval range from Kuraray. In another exemplary embodiment, the concentration is less than: 39%; 38%; 37%; 36%; 35%; 34%; 33%; 32%; 31%; 30%; 29%; 28%; 27%; 26%; 25%; 24%; 23%; 22%; 21%; 20%; 19%; 18%; 17%; 16%; 15%; 14%; 13%; 12%; 11%; 10%; 9%; 8%; 7%; 6%; 5%; 4%; 3%; 2%; and 1%.

In another embodiment, the polymer backbone P is a straight or branched chain homopolymer of vinyl alcohol or a copolymer of vinyl alcohol, at least one other monomer, and one or more reactive coupling groups. P represents a copolymer of vinyl alcohol and an olefin, such as ethylene or propylene, preferably ethylene. More preferably, the olefin is present in an amount from 1 to 50 mol%, preferably from 2 to 40 mol%, and more preferably from 5 to 20 mol% of the polymer backbone. In a further embodiment, the olefin is present in a mol% of the polymer backbone in the amount of 1%; 2%; 3%; 4%; 5%; 6%; 7%; 8%; 9%; 10%; 11%; 12%; 13%; 14%; 15%; 16%; 17%; 18%; 19%; 20%; 21%; 22%; 23%; 24%; 25%; 26%; 27%; 28%; 29%; 30%; 31%; 32%; 33%; 34%; 35%; 36%; 37%; 38%; 39%; 40%; 41%; 42%; 43%; 44%; 45%; 46%; 47%; 48%; 49% and 50%.

In an alternative embodiment, P represents a copolymer of vinyl alcohol and a vinylic monomer, such as an acrylic or methacrylic monomer. Examples of suitable vinyl monomers include but are not limited to styrene, acrylonitrile, methacrylonitrile, vinyl halides, vinylidene halides, (meth)acrylamide, N,N-dimethyl acrylamide, vinyl polyethers of ethylene or propylene oxide, vinyl esters such as vinyl formate, vinyl benzoate or vinyl ethers (such as VeoVa™ 10 available from Momentive™), vinyl ethers of heterocyclic vinyl compounds, alkyl esters of mono-olefinically unsaturated dicarboxylic acids and in particular esters of acrylic and methacrylic acid; vinyl monomers with hydroxyl functionality 2-hydroxy ethyl (meth)acrylate, 2-hydroxy propyl (meth)acrylate, glycerol mono(meth)acrylate, 4-hydroxy butyl (meth)acrylate, hydroxyl stearyl methacrylate, N-methylol (meth)acrylamide; vinyl monomers with additional functionality for crosslinking or adhesion promotion or post fictionalization of the vinyl polymers, such as diacetone acrylamide, aceto acetoxy ethyl (meth)acrylate, glycidyl methacrylate, 2-acrylamido-2-methylpropane sulphonic acid, (meth)acrylic acid, beta carboxy ethyl (meth)acrylate, maleic anhydride, styrene sulphonic acid, sodio sulpho propyl methacrylate, itaconic acid; N,N-dimethyl ethyl amino (meth)acrylate, N,N-diethyl ethyl amino (meth)acrylate, N,N-dimethyl ethyl amino (meth)acrylate, N,N-dimethyl propyl amino (meth)acrylate, N,N-diethyl propyl amino (meth)acrylate, vinyl pyridine, amino methyl styrene, vinyl imidazole; and basic amine monomers can be polymerized as the free amine, protonated salts or as a quaternised amine salt.

In an exemplary embodiment, the vinylic monomer can be selected from the group consisting of acrylic acid, acrylonitrile, acrylamide, 2-acrylamido-2-methylpropane sulphonic acid, methacrylic acid, methyl methacrylate, 2-hydroxyethyl acrylate, hydroxyethyl methacrylate, ethyl methacrylate and n-butyl methacrylate. In the case of a copolymer of acrylic, methacrylic or crotonic acid, the resulting copolymer may exist as a reacted adduct in the form a five-membered lactone ring.

In yet another embodiment, P represents a copolymer of vinyl alcohol and acetoacetoxyethyl methacrylates. Alternatively, P represents a copolymer of diacetone acrylamide and vinyl alcohol.

In another embodiment, with respect to the reactive coupling groups of 'P', there is described a ketone- or ketoester containing functional group, preferably a ketoester containing functional group. More preferably, the reactive coupling group comprises a ketoester containing functional group derivable from an acetoacetylation agent such as diketene, diketene acetone adduct and/or tert-butyl acetoacetate. Even more preferably, the ketoester containing functional group comprises the moiety -O(CO)CH-C(CH₃)=O.

Preferably, the reactive coupling group comprises a ketone- or ketoester containing functional group, more preferably a ketoester containing functional group. Suitable reagents capable of the generation of a ketoester (or acetoacetate) group are commercially available and are collectively referred to as acetoacetylation agents. In a preferred embodiment, the reactive coupling group comprises a ketoester containing functional group derived from an acetoacetylation agent. Preferred commercially available acetoacetylation agents include diketene (DK), diketene acetone adduct (DKAA) and an alkyl acetoacetate such as tert-butyl acetoacetate (t-BAA): 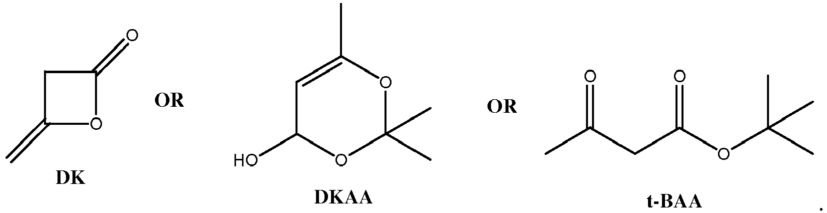 DK and DKAA are important acetoacetylation agents that find wide utility and are suitable for use.

A particularly preferred acetoacetylation agent is t-BAA. Other alkyl acetoacetates may also be used; for example, methyl, ethyl, n-propyl, iso-propyl, or n-butyl, t-pentyl acetoacetate. When an alkyl acetoacetate is used as the acetoacetylation agent, it is an optional aspect that the reactor is designed to vent the eliminated alcohol from the system.

Prior to use, the acetoacetylation agent may optionally be purified to promote a more efficient reaction and/or to obtain a purer end product. Suitable purification methods are known in the art. By way of example, DKAA may be purified by dissolution in acetone, followed by the addition of a hydrocarbon solvent such as hexane to precipitate some or all of the impurities as a solid, allowing pure DKAA to be separated and concentrated. Alternatively, the acetoacetylation agent may be purified by distillation.

It is commonly believed in the art that the reaction of DKAA and alcohols proceeds via an acetylketene intermediary, with the elimination of acetone, *e*.*g*., Acetic Acid and its Derivatives, edited by Victor H. Agreda and Joseph R. Zoeller, Marcel Dekker Inc., New York, USA. The resulting acetylketene exists in equilibrium with DKAA, as such it is predicted that the presence of excess acetone might have a stabilizing effect on the DKAA slowing the formation of acetylketene and the rate of acetoacetylation. Better results are generally obtained when the acetone is allowed to leave the reactor system used to acetoacetylate the polymer. When DKAA is used as the acetoacetylation agent, the reactor is allowed to vent any generated acetone.

t-BAA is an example of a particularly preferred alkyl acetoacetate acetoacetylation agent. Many alkyl acetoacetates may be used as facile acetoacetylation agents and as such offer potential in the functionalization of the polymer with ketoester groups. They form ketoester groups by a transacetoacetylation process, with the formation of an alcohol, which may establish an equilibrium with the reactants. In the case of t-BAA the process thus results in the elimination of tert-butanol. As an alternative to t-BAA any other alkyl acetoacetate such as methyl, ethyl, n-propyl, iso-propyl, or n-butyl, t-pentyl acetoacetate for instance may be used. Sterically hindered esters such as t-butyl or t-pentyl (synonym t-amyl) groups react significantly faster than do less sterically hindered esters such as methyl or ethyl acetoacetate, but dependant on the identity of the alcohol may generate an alcohol by-product with a higher boiling point. When an alkyl acetoacetate is used as the acetoacetylation agent, it is an optional aspect that the reactor is designed to vent the eliminated alcohol from the system.

The ketoester-containing functional group preferably comprises the moiety - O(CO)CH-C(CH₃)=O. By way of example, a ketoester functionalized poly(vinyl alcohol) (PVOH-KE) may be prepared, as follows:

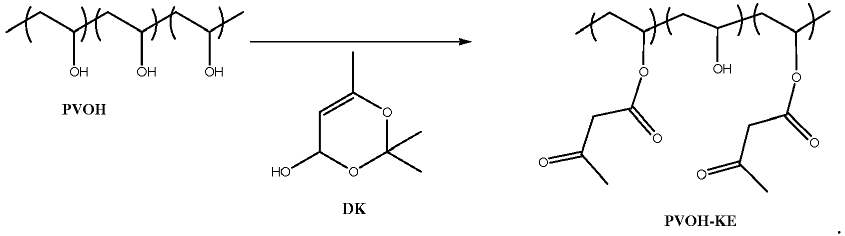

As previously mentioned, the preparation of keto-ester reactive coupled PVOH/EVOH of functional polymers is well known and is achieved by reacting the parent PVOH/EVOH with, for example, diketene or other suitable agent (such as the diketene-acetone adduct as depicted in (2):

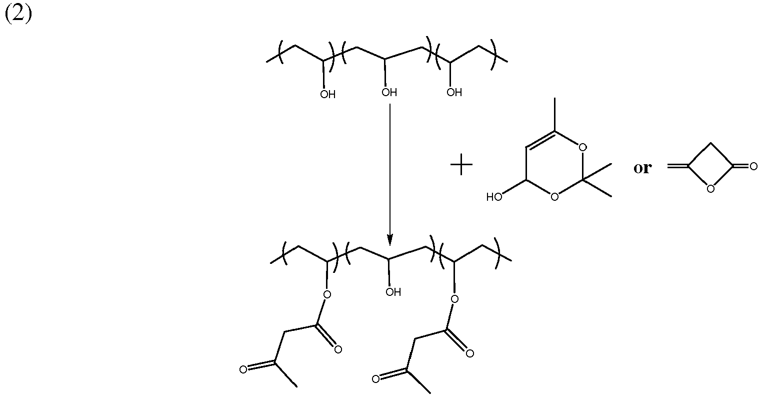

Polymers of this type are commercially available; the Gohsefimer range from Nippon Gohsei being a typical example.

These keto-ester reactive coupled or functional PVOH/EVOH polymers are readily reacted via their pendant carbonyl groups with aminosilanes. Scheme (3) below illustrates this, for the reaction between a keto-ester functional PVOH with [3-(2-aminoethylamino)propyl]trimethoxysilane, resulting in the desired imine adduct. Since the reactions are normally carried out in aqueous solutions, concurrent hydrolysis of the alkoxy silane will also likely occur and this is also shown in (3).

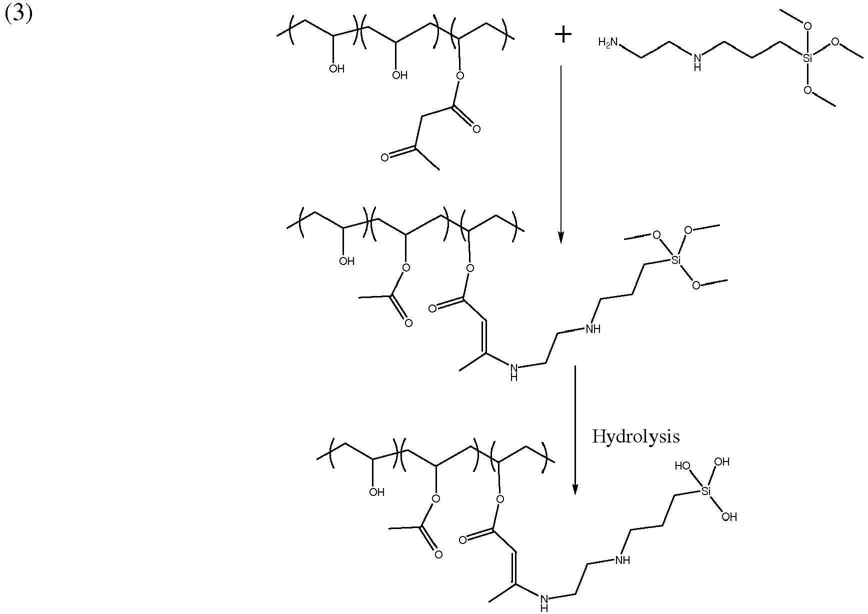

The ketone or ketoester containing functional group are typically present in an amount from about 1 to about 25 mol%, preferably from about 2 to about 15 mol%, even more preferably from about 3 to about 8 mol% of the polymer backbone. In an exemplary embodiment, the mol % of reaction coupling groups with respect to the polymer backbone may be 1%; 2%; 3%; 4%; 5%; 6%; 7%; 8%; 9%; 10%; 11%; 12%; 13%; 14%; 15%; 16%; 17%; 18%; 19%; 20%; 21%; 22%; 23%; 24%; and 25%.

In yet another embodiment, the polymer side-chains R are derived from aminosilanes which contain at least one primary amine group capable of reacting with the reactive coupling group(s) present on the polymer backbone and also at least one silanol group (Si-OH) or a precursor group to silanol, such as an alkoxysilane or aryloxysilane. In one embodiment, the side chains R are derived from a compound of general formula (IIA): 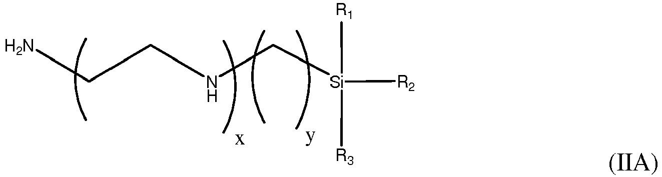
wherein, R₁, R₂ and R₃ independently represent H, C₁₋₉ alkyl, aryl, C₁₋₉ alkoxy or aryloxy, provided that at least one of R₁, R₂ or R₃ represents a C₁₋₉ alkoxy or aryloxy group;
x is in the range from 0 to 9, preferably 0 to 2; and
y is in the range from 1 to 9, preferably 2 to 6.

In a preferred embodiment of the polymer, x is 0, 1 or 2 and y is 3. In a further preferred embodiment, at least two of R₁, R₂ and R₃ independently represent C₁₋₉ alkoxy, and are preferably selected from the group consisting of methoxy, ethoxy, propoxy and butoxy.

Alternatively, the general formula could be according to formula IIB:

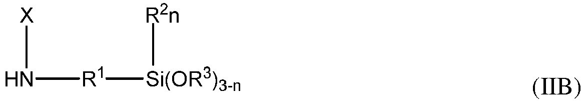

R1 is an alkyl or alkylene group of carbon number 1 to 4, R2 and R3 are alkyl groups of carbon number 1 to 4, X is a hydrogen atom or aminoalkyl group, and n is 1 or 0.

In a more preferred embodiment of the polymer, the side chains R are derived from one or more of the following compounds: aminoethyl triethoxy silane, 2-aminoethyl trimethoxy silane, 2-aminoethyl triethoxy silane, 2-aminoethyl tripropoxy silane, 2-aminoethyl tributoxy silane, 1-aminoethyl trimethoxy silane, 1-aminoethyl triethoxy silane, 3-aminopropyl trimethoxy silane, 3-aminopropyl triethoxy silane, 3-aminopropyl tripropoxy silane, 3-aminopropyl tributoxy silane, 3-aminopropyl methyl dimethoxysilane, 3-aminopropyl ethyl dimethoxysilane, 3-aminopropyl-3-aminopropyldiethylethoxysilane ethyl diethoxysilane, 3-aminopropyl methyl dipropoxysilane, 3-aminopropyl ethyl dipropoxysilane, 3-aminopropyl propyl dipropoxysilane, 3-aminopropyl dimethyl methoxysilane, 3-aminopropyl dimethyl ethoxysilane, 3-aminopropyl diethyl ethoxysilane, 3-aminopropyl dimethyl propoxysilane, 3-aminopropyl diethyl propoxysilane, 3-aminopropyl dipropyl propoxysilane, 2-aminopropyl trimethoxy silane, 2-aminopropyl triethoxy silane, 2-aminopropyl tripropoxy silane, 2-aminopropyl tributoxy silane, 1-aminopropyl trimethoxy silane, 1-aminopropyl triethoxy silane, 1-aminopropyl tripropoxy silane, 1-aminopropyl tributoxy silane, N-aminomethyl aminomethyl trimethoxy silane, N-aminomethyl aminomethyl tripropoxy silane, N-aminomethyl-2-aminoethyl trimethoxy silane, N-aminomethyl-2-aminoethyl triethoxy silane, N-aminomethyl-2-aminoethyl tripropoxy silane, N-aminomethyl-3-aminopropyl trimethoxy silane, N-aminomethyl-3-aminopropyl triethoxy silane, N-aminomethyl-3-aminopropyl tripropoxy silane, N-aminomethyl-2-aminopropyl trimethoxy silane, N-aminomethyl-2-aminopropyl triethoxy silane, N-aminomethyl-2-aminopropyl tripropoxy silane, N-aminopropyl trimethoxy silane, N-aminopropyl triethoxy silane, N-(2-aminoethyl)-2-aminoethyl trimethoxy silane, N-(2-aminoethyl)-2-aminoethyl triethoxy silane, N-(2-aminoethyl)-2-aminoethyl tripropoxy silane, N-(2-aminoethyl)-aminoethyl trimethoxy silane, N-(2-aminoethyl)-1-aminoethyl triethoxy silane, N-(2-aminoethyl)-1-aminoethyl tripropoxy silane, N-(2-aminoethyl)-3-aminopropyl triethoxy silane, N-(2-aminoethyl)-3-aminopropyl tripropoxy silane, N-(3-aminopropyl)-2-aminoethyl trimethoxy silane, N-(3-aminopropyl)-2-aminoethyl triethoxy silane, N-(3-aminopropyl)-2-aminoethyl tripropoxy silane, N-methyl-3-aminopropyl trimethoxy silane, 3-aminopropyl methyl dimethoxy silane, 3-aminopropyl methyl diethoxy silane, N-(2-aminoethyl)-3-aminopropyl methyl dimethoxy silane, 3-diethylene 3-diethylene triamine propyl triethoxy silane, 3-[2-(2-aminoethyl aminoethyl amino)propyl]trimethoxysilane, 3-[2-(2-aminoethyl aminoethyl amino) propyl] triethoxysilane, 3-[2-(2-aminoethyl aminoethyl amino) propyl] tripropoxysilane, and/or trimethoxy silyl propyl diethylene triamine.

Still more preferably, the side chains R are derived from one or more of the following compounds:
(a) 3-aminopropyl trimethoxy silane (APMES): 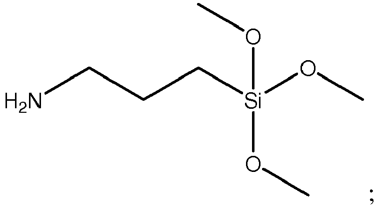
(b) 3-aminopropyl triethoxy silane (APTES): 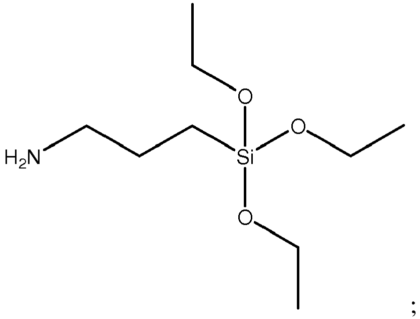
(c) N-(2-aminoethyl)-3-aminopropyl-trimethoxy silane (ETAPMS): 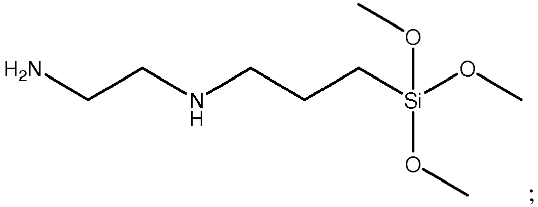
(d) N-(2-aminoethyl)-3-aminopropyl-triethoxy silane (ETAPES): 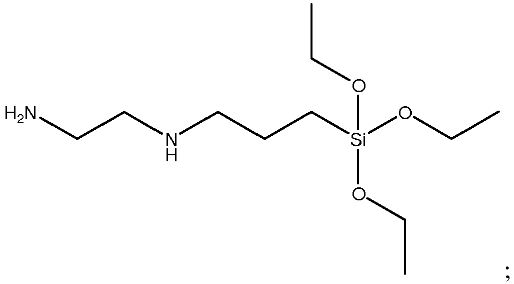
(e) 3-[2-(2-aminoethylamino)ethylamino]propyl trimethoxy silane (DETAPMS): 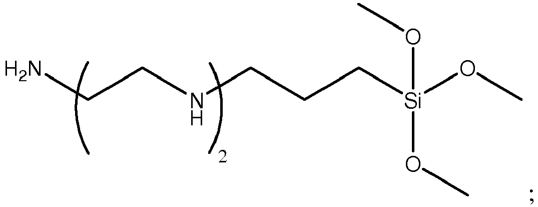
(f) 3-[2-(2-aminoethylamino)ethylamino]propyl triethoxy silane (DETAPES): 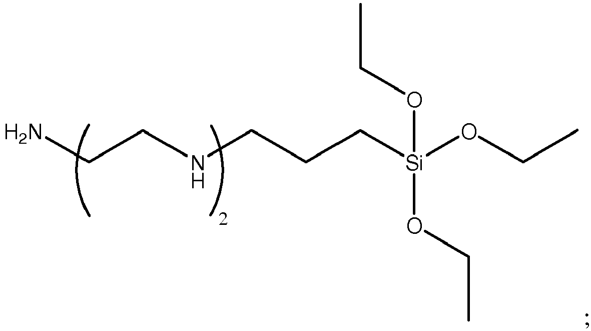 and
(g) 3-aminopropyl methyldimethoxy silane (APMS):

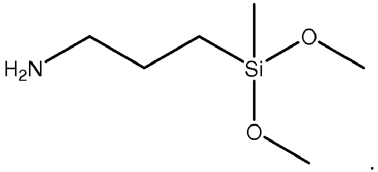

Most preferably, the side chains R are derived from 3-aminopropyl triethoxy silane, N-(2-aminoethyl)-3-aminopropyl triethoxysilane, or 3-[2-(2-aminoethylamino)ethylamino]propyl-triethoxy silane.

A suitable hydrazine or hydrazide functionalized aminosilane may also be employed.

In a preferred embodiment of the polymer, the side chains R are present in an amount from about 1 to 25 mol%; preferably in an amount from about 2 to 15 mol%, and even more preferably in an amount from about 3 to about 8 mol%, of the polymer backbone. In an exemplary embodiment, the mol % of side chains in relation to the polymer backbone may be 1%; 2%; 3%; 4%; 5%; 6%; 7%; 8%; 9%; 10%; 11%; 12%; 13%; 14%; 15%; 16%; 17%; 18%; 19%; 20%; 21%; 22%; 23%; 24%; and 25%.

Alternatively, an excess of aminosilane and/or aminosilanol may be employed during the polymer synthesis relative to the reactive coupling group. In such instances, some of the aminosilane and/or aminosilanol may be present in an unreactive form and therefore not attached to the polymer backbone.

In a preferred embodiment of the polymer, the side chains R, or alternatively the aminosilane represented by formula (IIA), are present in an amount from about 25 to about 200 mol%, such as from about 50 to about 150 mol%, preferably from about 75 to about 125 mol%, relative to the amount of reactive coupling groups present on the polymer backbone. In another embodiment, the amount of side chains in relation to the amount of reactive coupling groups present in the polymer backbone is: 25%; 26%; 27%; 28%; 29%; 30%; 31%; 32%; 33%; 34%; 35%; 36%; 37%; 38%; 39%; 40%; 41%; 42%; 43%; 44%; 45%; 46%; 47%; 48%; 49%; 50%; 51%; 52%; 53%; 54%; 55%; 56%; 57%; 58%; 59%; 60; 61%; 62%; 63%; 64%; 65%; 66%; 67%; 68%; 69%; 70%; 71%; 72%; 73%; 74%; 75%; 76%; 77%; 78%; 79%; 80%; 81%; 82%; 84%; 85%; 86%; 87%; 88%; 89%; 90%; 91%; 92%; 93%; 94%; 95%; 96%; 97%; 98%; 99% 100%; 101%; 102%; 103%; 104%; 105%; 106%; 107%; 108%; 109; 110%; 111%; 112%; 113%; 114%; 115%; 116%; 117%; 118%; 119%; 120%; 121%; 122%; 123%; 124%; 125%; 126%; 127%; 128%; 129%; 130%; 131%; 132%; 133%; 134%; 135%; 136%; 137%; 138%; 139%; 140%; 141%; 142%; 143%; 144%; 145%; 146%; 147%; 148%; 149%; 150%; 151%; 152%; 153%; 154%; 155%; 156%; 157%; 158%; 159%; 160; 161%; 162%; 163%; 164%; 165%; 166%; 167%; 168%; 169%; 170%; 171%; 172%; 173%; 174%; 175%; 176%; 177%; 178%; 179%; 180%; 181%; 182%; 184%; 185%; 186%; 187%; 188%; 189%; 190%; 191%; 192%; 193%; 194%; 195%; 196%; 197%; 198%; 199%; and 200%.

In an exemplary embodiment, the polymers are substantially free from acetic acid or an alkali metal salt thereof such as sodium acetate. In particular, no acetic acid or metal salts thereof are added to assist in cross-linking.

A range of aminosilanes are suited to this invention and the following non-restrictive list indicates the materials suited to this application, according to formula (1); aminoethyl triethoxy silane, 2-aminoethyl trimethoxy silane, 2-aminoethyl triethoxy silane, 2-aminoethyl tripropoxy silane, 2-aminoethyl tributoxy silane, 1-aminoethyl trimethoxy silane, 1-aminoethyl triethoxy silane, 3-aminopropyl trimethoxy silane, 3-aminopropyl triethoxy silane, 3-aminopropyl tripropoxy silane, 3-aminopropyl tributoxy silane, 2-aminopropyl trimethoxy silane, 2-aminopropyl triethoxy silane, 2-aminopropyl tripropoxy silane, 2-aminopropyl tributoxy silane, 1-aminopropyl trimethoxy silane, 1-aminopropyl triethoxy silane, 1-aminopropyl tripropoxy silane, 1-aminopropyl tributoxy silane, N-aminomethyl aminomethyl trimethoxy silane, N-aminomethyl aminomethyl tripropoxy silane, N-aminomethyl-2-aminoethyl trimethoxy silane, N-aminomethyl-2-aminoethyl triethoxy silane, N-aminomethyl-2-aminoethyl tripropoxy silane, N-aminomethyl-3-aminopropyl trimethoxy silane, N-aminomethyl-3-aminopropyl triethoxy silane, N-aminomethyl-3-aminopropyl tripropoxy silane, N-aminomethyl-2-aminopropyl trimethoxy silane, N-aminomethyl-2-aminopropyl triethoxy silane, N-aminomethyl-2-aminopropyl tripropoxy silane, N-aminopropyl trimethoxy silane, N-aminopropyl triethoxy silane, N-(2-aminoethyl)-2-aminoethyl trimethoxy silane, N-(2-aminoethyl)-2-aminoethyl triethoxy silane, N-(2-aminoethyl)-2-aminoethyl tripropoxy silane, N-(2-aminoethyl)-aminoethyl trimethoxy silane, N-(2-amino ethyl)-1-aminoethyl triethoxy silane, N-(2-aminoethyl)-1-aminoethyl tripropoxy silane, N-(2-aminoethyl)-3-aminopropyl triethoxy silane, N-(2-aminoethyl)-3-aminopropyl tripropoxy silane, N-(3-aminopropyl)-2-aminoethyl trimethoxy silane, N-(3-aminopropyl)-2-aminoethyl triethoxy silane, N-(3-aminopropyl)-2-aminoethyl tripropoxy silane, N-methyl-3-aminopropyl trimethoxy silane, 3-aminopropyl methyl dimethoxy silane, 3-aminopropyl methyl diethoxy silane, N-(2-aminoethyl)-3-aminopropyl methyl dimethoxy silane, 3-diethylene 3-diethylene triamine propyl triethoxy silane, 3-[2-(2-aminoethyl aminoethyl amino) propyl] trimethoxy silane, trimethoxy silyl propyl diethylene triamine etc. These materials may be used alone or in combination.

The preferred ratio of aminosilane used to react with the keto-ester reactive coupled or functional PVOH/EVOH polymer or copolymer is in the range of 1:2 to 1:100 based upon the relative weights of the 2 reagents. These ratios were described in Revolymer's original application and our provisional] By this, we mean that the preferred ratio is 1 part of an aminosilane to between 2 and 100 parts of the keto-ester functional PVOH/EVOH. A more preferred aminosilane:keto-ester functional PVOH/EVOH ratio is between 1:2 and 1:20. In an exemplary embodiment, the ratio is: 1:2; 1:3: 1:4; 1:5; 1:6; 1:7; 1:8; 1:9; 1:10; 1:11; 1:12; 1:13; 1:14; 1:15; 1:16; 1:17; 1:18; 1:19; 1:20; 1:21; 1:22; 1:23; 1:24; 1:25; 1:26; 1:27; 1:28; 1:29; 1:30; 1:31; 1:32; 1:33; 1:34; 1:35; 1:36; 1:37; 1:38; 1:39; 1:40; 1:41; 1:42; 1:43; 1:44; 1:45; 1:46; 1:47; 1:48; 1:49; 1:50; 1:51; 1:52; 1:53; 1:54; 1:55; 1:56; 1:57; 1:58; 1:59; 1:60; 1:61; 1:62; 1:63; 1:64; 1:65; 1:66; 1:67; 1:68; 1:69; 1:70; 1:71; 1:72; 1:73; 1:74; 1:75; 1:76; 1:77; 1:78; 1:79; 1:80; 1:81; 1:82; 1:83; 1:84; 1:85; 1:86; 1:87; 1:88; 1:89; 1:90; 1:91; 1:92; 1:93; 1:94; 1:95; 1:96; 1:97; 1:98; 1:99; and 1:100.

In an alternative embodiment, the aminosilane:keto-ester functional PVOH/EVOH ratio may equimolar, or fairly close thereto. For examples the ratio may be 2:1 to 1:100. More preferably, the ratio is 2:1 to 1:10. Even more preferably, the ratio is 1.5:1 to 5:1.

According to another aspect of the present invention, there is provided a process for preparing a functionalised vinyl alcohol homopolymer or copolymer of the type described above, comprising the steps of:
a. preparing a straight or branched chain homopolymer of vinyl acetate or a copolymer of vinyl acetate with at least one other monomer;
b. hydrolysing the homopolymer or copolymer of vinyl acetate of step (a) to obtain a homopolymer or copolymer of vinyl alcohol;
c. reacting the homopolymer or copolymer of vinyl alcohol of step (b) with a suitable reactive coupling agent to obtain a homopolymer or copolymer of vinyl alcohol comprising one or more reactive coupling groups;
d. reacting the resulting homopolymer or copolymer of vinyl alcohol comprising one or more reactive coupling groups of step (c) with a suitable aminosilane and/or an aminosilanol; and
e. optionally isolating the copolymer so formed.

The polymer obtained upon completion of each reaction detailed in steps (a) to (d) of the above process may be isolated prior to initiation of the following step or reacted in situ.

According to one embodiment of step (a) of the above process, vinyl acetate is reacted with at least one other monomer to obtain a straight or branched chain vinyl acetate copolymer. Thereafter, according to step (b), the copolymer of vinyl acetate is hydrolysed to obtain a copolymer of vinyl alcohol. By way of example, ethylene may be copolymerised with vinyl acetate to afford an ethylene-vinyl acetate copolymer, which may be subsequently hydrolysed to form an ethylene-vinyl alcohol copolymer (EVOH), as follows:

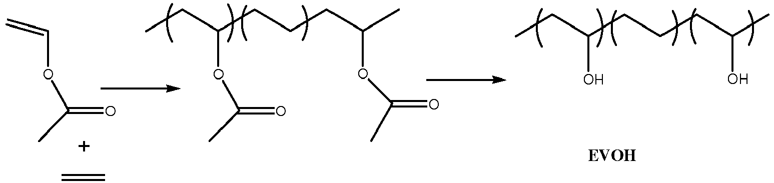

Alternatively, vinyl acetate is polymerised to obtain a straight or branched chain vinyl acetate homopolymer, *i.e.* poly(vinyl acetate). Thereafter, according to step (b), the homopolymer of vinyl acetate is hydrolysed to poly(vinyl alcohol), as follows:

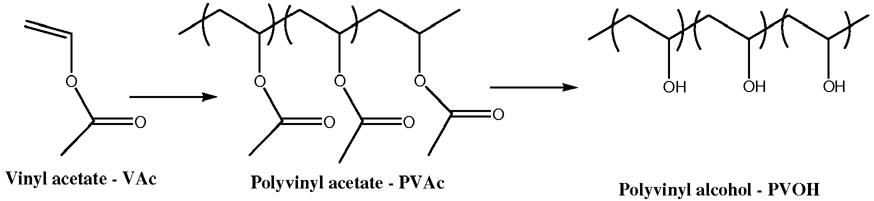

PVOH may also be prepared by the hydrolysis of other poly(vinyl esters) such as poly(vinyl formate), poly(vinyl benzoate) or poly(vinyl ethers). Similarly a copolymer of vinyl alcohol, such as, EVOH may also be prepared by copolymerising the relevant monomer with a vinyl ester other than vinyl alcohol and hydrolysing the resulting polymer.

During step (b) of the process, a number of vinyl acetate groups may remain unhydrolysed in the resulting polymer. In an exemplary embodiment of the invention, step (b) includes partial hydrolysis of the homopolymer or copolymer of vinyl acetate, for example, between about 25 and about 100% hydrolysis. More preferably partial hydrolysis ranges between about 50 and about 100% hydrolysis. Even more preferably, partial hydrolysis ranges between about 70 to about 100% hydrolysis. Yet even more preferably, partial hydrolysis ranges between about 80 to about 100 %.

Suitable poly(vinyl alcohols) for use in the process described above include commercially available alcohols or those prepared by conventional synthetic methods. For example, poly(vinyl alcohols) are commercially available from Nippon Gohsei under the trade name Gohsenol™ or from Kuraray under the trade name Poval™. Suitable copolymers of vinyl alcohol (such as EVOH) for use in the process of the present invention are commercially available or may be prepared by conventional synthetic methods. For example, copolymers of ethylene and vinyl alcohol are commercially available from Kuraray under the trade name Exceval™ and from Nippon Gohsei under the trade name Soarnol™.

According to step (c) of the process, the homopolymer or copolymer of vinyl alcohol is reacted with a suitable reactive coupling agent to obtain a copolymer of vinyl alcohol comprising one or more reactive coupling groups. Generally, step (c) is performed in a suitable solvent (i.e. a solvent capable of solvating both the homopolymer or copolymer of vinyl alcohol and the reactive coupling agent, and that is inert to both), such as dimethylformamide (DMF), dimethylsulfoxide (DMSO) or dimethylacetamide (DMAc), at an elevated temperature in the range from about 90 to 190 °C, such as about 135 °C.

Alternative, the process can be carried out in the concentrated phase or by using an essentially no-solvent process. By way of example, US5719231 describes the reaction of an acetoacetate forming composition with a vinyl alcohol based polymer in the solid phase by spraying the acetoacetate forming composition onto the solid polymer at elevated temperatures. An analogous process may be employed in the present invention.

Alternatively, a paste or dispersion of the polymer in a solvent such as water or a dipolar aprotic solvent or non-solvent such as an organic acid may be made. By way of example, acetic acid may be adsorbed, sprayed or mixed with polymers of vinyl alcohol prior to reaction with diketene (in an analogous method described in JP9291185A). Alternatively, a paste of the vinyl alcohol polymer in water may be made by mixing the polymer with water, optionally with elevated temperature and stirring of high intensity or by concentrating an existing solution of the polymer under vacuum for instance. The functionalisation can be carried out with the polymer dispersed or suspended in a liquid medium which is a good solvent for the acetoacetylation agent. By way of example, the polymer can be dispersed in a hydrocarbon solvent such as hexane or an organic acid such as acetic acid and diketene added to the mixture. Following reaction of the acetoacetylation agent with the polymer, liquid can be separated by filtration and optionally reused in the process taking advantage of the greater degree of efficiency this offers. Unreacted acetoacetylation agent or solvent/dispersal media such as acid may be removed by evaporation, or by washing it from the material with a suitable solvent.

Alternatively, a ketoester functionalized ethylene-vinyl alcohol copolymer (EVOH-KE) may be prepared, as follows:

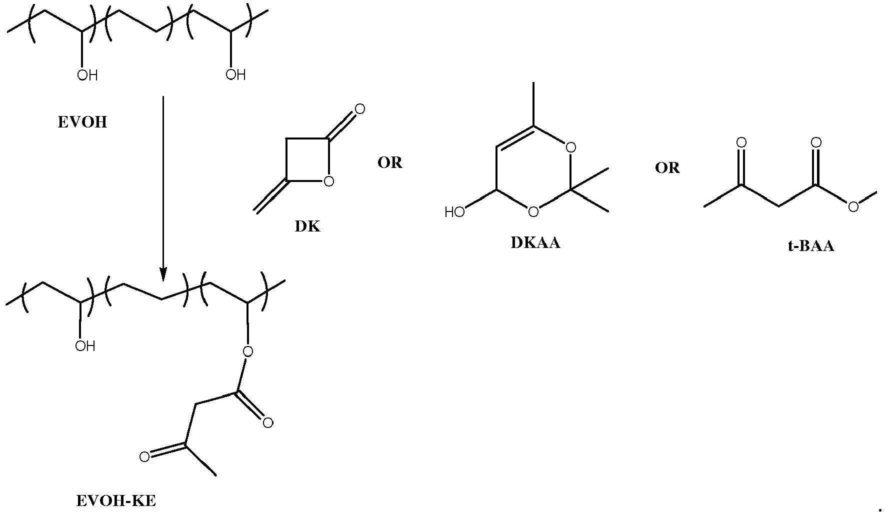

Ketoester-functionalized homo- and copolymers of vinyl alcohol of the type prepared in step (c) may also be prepared using other techniques. A suitable vinylic monomer with an acetoacetate group may be grafted onto a vinyl alcohol copolymer by means of a radical mechanism. For example, acetoacetoxyethyl methacrylate (AAEM), which is commercially available from the Eastman Company, may be combined with the vinyl alcohol polymer and a suitable radical initiator such as an azo or peroxide compound in solution or dispersion. Alternatively, the suitable vinylic monomer with an acetoacetate group may be copolymerized with vinyl acetate or another vinyl ester and the resulting polymer selectively hydrolyzed. Such methodologies constitute alternative embodiments of the process.

According to step (d) of the process, the homo- or copolymer of vinyl alcohol comprising one or more reactive coupling groups obtained in step (c), for example EVOH-KE or PVOH-KE, is reacted with a suitable aminosilane and/or an aminosilanol. The amino group on the aminosilane reacts with the reactive coupling group on the polymer backbone (such as the ketoester group) in order to form a secondary amine, for example as follows:

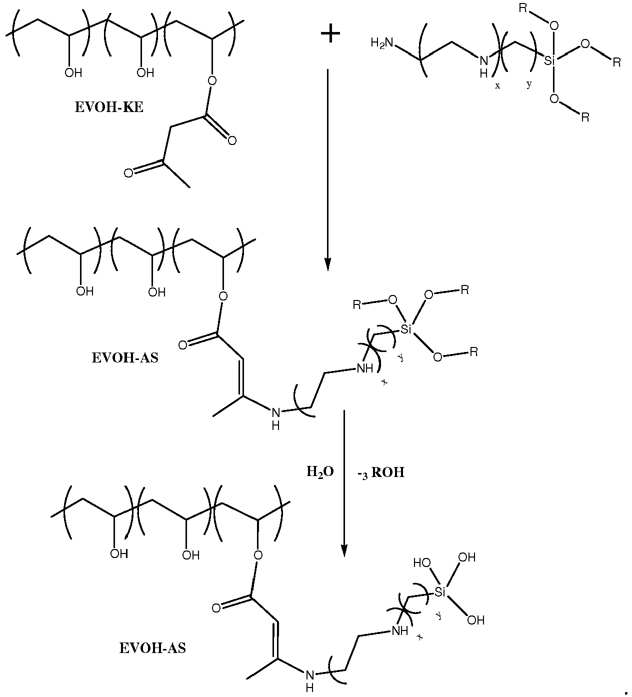

The aminosilane may be used in unhydrolysed form or may be allowed to hydrolyze in water prior to addition to the polymer. Preferably the solvent used in step (d) is one that the polymer backbone and resulting aminosilane functionalized polymer has good solubility in such as water or dipolar aprotic solvents including DMF or DMSO. The reaction is performed in a mixture of one or more such solvents and another miscible solvent such as an alcohol (for example, methanol, ethanol, n-propanol or iso-propanol, preferably n-propanol). There are compositions comprising a functionalized poly(vinyl alcohol) or vinyl alcohol copolymer of the invention and water or a mixture of water and a C₁₋₄ alcohol wherein such compositions are preferably free from acid catalysts and may be used to prepare coatings containing the functionalized homo- and copolymers of vinyl alcohol of the present invention.

The aminosilanes and aminosilanols employed are commercially available and/or may be prepared by conventional synthetic methods.

3-aminopropyltrimethoxy silane is commercially available from the Sigma-Aldrich corporation, from Power Chemical Corporation under the trade name PC1110™, and from Onichem under the trade name A301™.

3-aminopropyl triethoxysilane is commercially available from the Sigma-Aldrich corporation, from Wacker Chemie under the trade name Geniosil GF 93™, and from Gelest under the trade name SIA0610.0™.

N-(2-aminoethyl)-3-aminopropyl trimethoxysilane is commercially available from Evonik under the trade name Dynasylan DAMO™ and from Dow Corning under the name Z-6094 Silane™.

3-[2-(2-aminoethylamino)ethylamino]propyl trimethoxysilane is commercially available from UCT under the trade name T2910™ and from Evonik under the trade name Dynasylan TRIAMO™.

3-[2-(2-Aminoethylamino)ethylamino]propyl triethoxysilane is commercially available from Tianjin Zhongxin.

3-Aminopropylmethyl dimethoxysilane is commercially available from the Power Chemical Corporation under the trade name SiSiB PC1130™.

The functionalized vinyl alcohol polymers may be optionally isolated from solution by conventional means, for example by evaporation or spray drying.

The functionalized homo- and copolymers of vinyl alcohol in the ink or coating composition contains one or more silanol (Si-OH) groups. It is known the silanol groups of aminosilanes may crosslink to form a Si-O-Si network, according to the following general equation:

2T-Si(T₂)-OH → T-Si(T₂)-O-Si(T₂)-T + H₂O

(wherein T is any appropriate functional group such as alkyl, H, OH or alkoxy).

Cross-linking polymers according to this technique increases resistance to abrasion. This is especially the case in the presence of solvents in which the polymer is soluble. Homo and copolymers of vinyl alcohol when functionalized with certain aminosilanes of general formula (III) readily crosslink upon heating to form resistant coatings without the addition of an acid catalyst. Formula (III) is as follows: 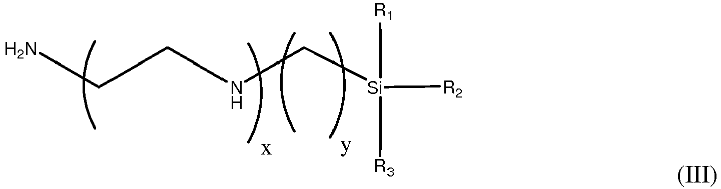
wherein, R₁, R₂ and R₃ are as hereinbefore defined with reference to formula (IIA);
x is in the range from 2 to 9, preferably x is 2; and
y is in the range from 3 to 9, preferably y is 3.

A series of compositions were prepared by reacting certain aminosilanes with commercially sourced ketoester functionalized polymers, or from vinyl alcohol homo- and copolymers that were subsequently functionalized by means of an acetoacetylation agent, as shown in **Table 1** below:

**Table 1**

| **Sample Name** | **Estimate of KE (mol%) on PVA and Backbone** | **PVOH Conc. Weight %** | **Solvent** | **Cross-linker** | **Conc. (mol%)** | **Acidified** |
|---|---|---|---|---|---|---|
| PVOH AS-1A | 4.4 (Z-200) | 5 | Water | DETAPMS | ∼5 | No |
| PVOH AS-1B | 4.4 (Z-200) | 5 | Water | DETAPMS | ∼10 | No |
| PVOH AS-1C | 4.4 (Z-200) | 10 | Water | DETAPMS | ∼5 | No |
| PVOH AS-1D | 4.4 (Z-200) | 10 | Water | DETAPMS | ∼10 | HCl |
| PVOH AS-1E | 4.4 (Z-200) | 10 | Water | DETAPMS | ∼10 | No |
| PVOH AS-1F | 4.4 (Z-200) | 10 | Water | DETAPMS | ∼10 | CH₃CO₂H |
| PVOH AS-1G | 0 (M4-98) | 10 | Water | DETAPMS | ∼10 | No |
| PVOH AS-1H | 8.4 (O3551) | 10 | Water | DETAPMS | 50 | No |
| PVOH AS-1I | 4.4 (Z-100) | 10 | Water | DETAPMS | ∼5 | No |
| PVOH AS-1J | 4.4 (Z-200) | 15 | Water | DETAPMS | ∼5 | No |
| PVOH AS-2A | ∼5 (M4-98) | 10 | Water | DETAPMS | 20 | HCl |
| PVOH AS-2B | ∼5 (M4-98) | 10 | Water | DETAPMS | 80 | HCl |
| PVOH AS-2C | ∼10(M4-98) | 10 | Water | DETAPMS | 50 | HCl |
| PVOH AS-2D | ∼20(M4-98) | 10 | Water | DETAPMS | 20 | HCl |
| PVOH AS-2E | ∼20(M4-98) | 10 | Water | DETAPMS | 80 | HCl |
| PVOH AS-2F | ∼5 (M4-98) | 10 | Water | DETAPMS | 20 | No |
| PVOH AS-2G | ∼10(M4-98) | 10 | Water | DETAPMS | 50 | No |
| PVOH AS-2H | 1.3 (M4-98) | 10 | Water | DETAPMS | 16 | No |
| PVOH AS-21 | 1.3 (M4-98) | 10 | Water | DETAPMS | 32 | No |
| PVOH AS-3A | ∼4 (AQ4104) | 10 | 75 H₂O/25 nPr | DETAPMS | ∼5 | No |
| PVOH AS-3B | ∼4 (AQ4104) | 10 | 75 H₂O/25 nPr | DETAPMS | ∼10 | No |
| PVOH AS-3C | ∼4 (AQ4104) | 10 | 75 H₂O/25 nPr | APTES | 10 | No |
| PVOH AS-3D | ∼4 (AQ4104) | 10 | 75 H₂O/25 nPr | APTES | 11.5 | No |

Ketoester mol% is defined as the percentage of the repeat units that have ketoester (KE) functionality. At a level of 10%, 1 in 10 of the PVOH units, *i*.*e*., the hydroxyl containing vinyl alcohol unit, in the polymer will be KE functionalized. Crosslinker mol% is defined as the percentage of the KE functionality that is reacted with aminosilane. At a level of 50% this means that half of the KE groups should react with the crosslinker. An estimate for the actual KE functionality grafted on is obtained using FT-IR. Values quoted for AQ4104™ are equivalent to a 100% vinyl alcohol material.

Z-200™ and OKS-3551™ (03551) poly(vinyl alcohol) (PVA) functionalized with KE groups were obtained from Nippon Gohsei. All other polymer backbones were prepared by reacting diketene acetone adduct with Mowiol 4-98™ (M4-98™, Kuraray) or Exceval™ AQ-4104 (AQ-4104™, Kuraray) in DMSO solution. M4-98™ is a PVA with a viscosity of 4.0 - 5.0 MPas and a 98.0 - 98.8 % degree of hydrolysis. AQ4104™ is a PVA with approximately 14% ethylene and a viscosity of 3.8 - 4.5 MPas and a 98.0 - 99.0 % degree of hydrolysis. Sample AS 1G was manufactured as a control without KE functionalized PVA.

According to the present invention, the ink and coating compositions include fillers. The fillers may include but are not limited to the following: talc, calcium carbonate, barium sulfate, wollastonite, mica, clay, kaolin, silica, diatomaceous earth, alumina, zinc white, magnesium oxide, calcium sulfite, calcium sulfate, calcium silicate, barium sulphate, glass powders and combinations thereof. Particularly preferred fillers are clays.

The clay compound is advantageously one which disperses readily in aqueous media, a high degree of exfoliation of the mineral lamellae being required to provide the maximum barrier performance. The clay used is preferably a nanoparticulate. A nanoparticulate clay is a clay with particles having at least one dimension in the nanometer range, *i*.*e*., of less than 100 nm. Typically, nanoparticulate clay particles have a maximum thickness dimension of less than 100 nm, for example a maximum dimension of less than 50 nm, such as a maximum dimension of less than 20 nm.

There is no restriction on the type of clay used in this invention provided that it is sufficiently dispersible in an aqueous medium, it is capable of being intercalated or exfoliated during dispersion and/or it is suitable for use in an oxygen barrier coating. In an exfoliated form, the aspect ratio of the clay, *i*.*e*., the ratio between the length and thickness of a single clay 'sheet', will have an impact on the level of oxygen barrier achieved. The greater the aspect ratio, the more the rate of oxygen diffusion through the dry coating and laminate will be reduced. Advantageously, the clay has an aspect ratio greater than about 20 in its exfoliated form. Clay minerals with aspect ratios between 20 and 10,000 are typically used. Particularly preferred are those minerals having an aspect ratio greater than about 50 for example greater than about 100, and more particularly greater than 250.

Examples of suitable clays include kaolinite, montmorillonite, atapulgite, illite, bentonite, halloysite, kaolin, mica, vermiculite, diatomaceous earth and fuller's earth, calcined aluminum silicate, hydrated aluminum silicate, magnesium aluminum silicate, sodium silicate and magnesium silicate. These materials may be used alone or in combinations. Particularly preferred clays are those of the vermiculite family. Commercial examples of suitable materials are available as pre-made dispersions, such as the Microlite range from W.R. Grace. In a preferred embodiment, the clay is a vermiculite.

According to the inventors, the above-described clays in combination with the novel silyl-functional polymers exhibit improved bond strength while maintaining good barrier performance even in high relative humidity. The results are provided in more detail below.

In yet another aspect of the present invention, the ink and coating compositions are applied onto a substrate. While there is no particular restriction on the nature of the flexible substrate, plastic polymeric films are preferred. However, where the material being packaged with the coating film of the present invention is a foodstuff or pharmaceutical, it will normally be preferred that the plastics film or other substrate is food grade.

Examples of suitable materials include: polyolefins, such as polyethylene or polypropylene; polyesters, such as polyethylene terephthalate, polybutylene terephthalate or polyethylene naphthenate; polyamides, such as nylon-6 or nylon-66; and other polymers, such as polyvinyl chloride, polyimides, acrylic polymers, polystyrenes, celluloses, or polyvinylidene chloride. It is also possible to use copolymers of any compatible two or more of the monomers used to produce these polymers. Furthermore, compositions of the present invention may be included in adhesively formed laminates comprising paper substrates (such as polyester and polyolefin coated paperboards commonly encountered in food packaging).

The substrate is preferably treated immediately prior to its being coated with the composition of the present invention, preferably by corona discharge, though other treatment methods known in the art are also acceptable. This process is well known in the art and is described, for example, in "Plastics Finishing and Decoration", edited by Donatas Satas, published by Van Nostrand Reinhold Company in 1986, at pages 80-86. The two flexible polymer films may be the same as each other or they may be different from each other.

Exemplary food packaging applications include but not limited to MAP (modified atmosphere packaging), such as cooked (chilled) meats, cheeses, yoghurts, etc. These plastic packages contain a modified atmosphere which can be controlled blends of N₂ and CO₂. Thus, oxygen is excluded from the package helping to prevent spoilage of the product by oxidation or aerobic bacterial action. Other packaging types which require a good level of oxygen barrier include savory products like potato chips and nuts. It's important to exclude oxygen from these products to slow and/or prevent the oxidation of the fats contained therein. Flexible barrier packaging is used in many more applications, including coffee packaging, wine packaging, and juice packaging.

Measured examples of PET-Al films for their oxygen barrier performance have values for oxygen transmission rates (OTR) in the range 1.0-7.5 cm³/m². One advantage of this type of film is that the oxygen barrier performance remains independent of relative humidity. However, the films are opaque and the oxygen barrier performance of these films deteriorates in view of cracks when the film is flexed.

Similarly, thin ceramic coated plastic films are also commonly used. These are either thin aluminium oxide ('AlOₓ') or silicon oxide ('SiOₓ') coated films, particularly PET. Similar to PET-Al coatings, the oxygen barrier performance of these films is independent of relative humidity, but they are also prone to flex cracking causing loss of gas barrier performance. Measured OTRs in the ranges of 2-10 and 1-6 for PET-AlOₓ and PET-SiOₓ.

Moreover, inorganic coated films require specialized high vacuum equipment for their manufacture. The instant coatings can be applied onto plastic films by conventional printing methods which makes them potentially much more versatile. Moreover, a printer does not have to stock various films, *e.g*., PET, PET-SiOₓ, etc, and may stock the uncoated base films, *e*.*g*., PET, and apply their own barrier coatings.

According to yet even another aspect of the present invention, an adhesive may be applied onto a substrate having the ink and coating composition as described above. There is no particular restriction on the nature of the adhesive used, and any adhesive commonly used for the adhesion of two or more plastics films may be employed in the present invention. Examples of suitable adhesives include solvent-based (polyurethane) types such as those from Henkel (Liofol UR3969/UR 6055, Liofol UR3640/UR6800, Liofol UR3894/UR6055), Rohm&Haas (Adcote 811/9L10) and Coim (CA2525/2526, NC250/CA350); Solvent-free polyurethane adhesives such as Liofol 7780/UR6082, UR7750/UR6071 from Henkel, and Mor-Free ELM-415A/Mor-Free CR140 from Rohm&Haas, can also be used. Additionally, epoxy-based adhesives such as Lamal 408-40A/C5083 may be used. Waterborne adhesives, such as Aqualam 300A/300D, an epoxy type from Rohm & Haas may also be used. This layer bonds the oxygen barrier layer to the protective layer or layers as described above.

Examples of the material for this layer include polar group-containing modified polyolefins obtained by graft modifying polyethylene, polypropylene, or ethylene-vinyl acetate copolymer with unsaturated carboxylic acids, or unsaturated polycarboxylic acids or anhydrides thereof; ethylene-vinyl acetate copolymer and saponification products thereof; ethylene-ethylacrylate copolymer, ethylene-acrylic acid copolymer, ethylenemethacrylic acid copolymer, ionomers obtained by crosslinking such copolymers with metallic ions; and block copolymers of styrene with butadiene. These are preferably synthetic resins compatible with synthetic resins used for forming the oxygen barrier layer and the protective layers.

### RESULTS AND DISCUSSION

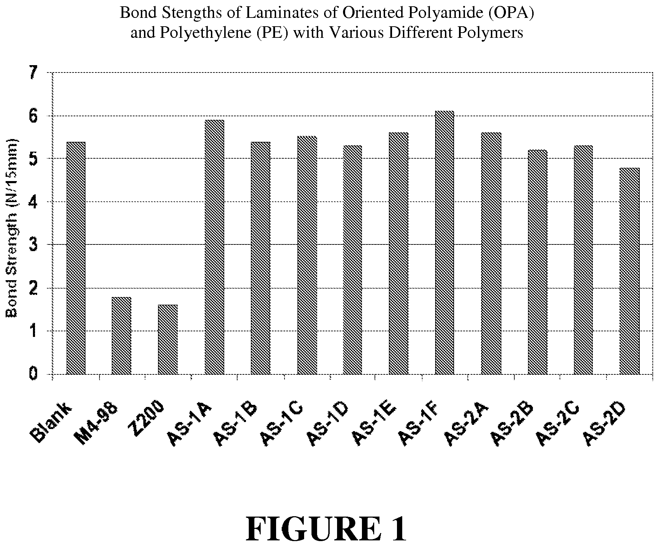

As illustrated in **Figure 1**, the addition of layers of the unmodified poly(vinyl alcohol) polymer backbone M4-98™ and ketoester modified poly(vinyl alcohol) polymer backbone Z-200™ undermined the bond strength of the adhesively formed laminate. By contrast, the polymers modified with aminosilane retained a similar, and in some cases, greater degree of adhesion between laminate layers.

A formulation was prepared in which unmodified polymer backbone was mixed with aminosilane (AS 1G) and the resulting adhesion of a laminate containing the polymer measured. There being no group for the amino group to attach itself to the backbone, the two exist as a mixture in solution and adhesion between the sheets in the resulting laminates was consequently very poor as expected. In this example the superior adhesion of the aminosilane functionalized homo- and copolymers of vinyl alcohol will allow their use where otherwise not possible.

In general, unmodified homo- and copolymer vinyl alcohol films are susceptible to attack from moisture or immersion in water. It was unexpectedly found that judicious levels of ketoester and aminosilane functionalisation in polymer backbones could facilitate notable increases in the adhesion of laminates of orientated polypropylene (PP) and polyethylene (PE) film.

Several different aminosilanes were mixed with samples of a ketoester poly(vinyl alcohol) obtained from Nippon Gohsei (OKS 3551™) and films cast on glass slides which were cured or dried at 100 °C. The fastness of the resulting coatings was tested by exposure to water solvent using ASTM test method number ASTM D 5402-06, Method A entitled *"Standard Practice for Assessing the Solvent Resistance Of Organic Coatings Using Solvent Rubs"* replacing methyl ethyl ketone with water. According to this test method, a cloth wetted with water was rubbed backwards and forwards along films of the polymers with an approximately constant amount of force of 1 to 2 Kg by means of a human hand. The number of rubs back and forth required for the films to fail was recorded. The results are summarized in **Table 2** below describing the relationship between aminosilane reacted with OKS-3551™ and resistance to water rubs.

**Table 2**

| **Aminosilane** | **Number of Water Rubs** |
|---|---|
| APTMS | 4 |
| APTES | 5 |
| ETAPMS | 4 |
| DETAPMS | >200 |

Unmodified poly(vinyl alcohol) starts to dissolve essentially immediately on contact with the damp cloth. By contrast, the APTMS, APTES and ETAPMS modified PVOHs were found to survive a little longer due to their more hydrophobic composition and enhanced adhesion. After several rubs under these severe conditions they however also started to peel as they had little or no crosslinking. The film of DETAPMS had crosslinked to significant or substantial degree upon curing and as a result it was able to withstand the duration of the test (200 rubs). Optionally, therefore the enhanced adhesion of the invention may also benefit from cross-linking with aminosilanes with multiple repeat ethylene amine units to give it superior mechanical adhesion.

To evaluate the adhesive properties of the functionalized homo- and copolymers of vinyl alcohol in the ink or coating composition for use in rigid, flexible food and industrial packaging, films of solutions of the same were cast on substrates representative of packaging materials and allowed to air dry. The packaging materials included orientated polyamide (OPA), and polyolefins such as polyethylene (PE) and polypropylene (PP) in an appropriate filmic format for use in packaging laminates. The substrates tested in the above-mentioned process were freshly corona discharge treated 12 µm Melinex S, 25 µm OPP (25MB400; ex. Exxon Mobil films) and a 25 µm OPA (nylon film), supplied by Sun Chemical (USA).

Then, the ink or coating compositions were applied with a No. 1 K-Bar, for example, as supplied by RK Print UK Ltd, delivering about 6 µm of wet film thickness onto the substrate. The coating was dried in a flow of warm air, e.g., laboratory prints dried with a hair dryer. The oxygen transmission rates of the coated substrate samples was evaluated using a Mocon Oxtran 2/21 gas permeability tester The results are provided in more detail below.

The laminated packages were prepared by applying the ink or coating composition to the treated side of the plastic film, an adhesive was applied over the top of the dried coating and a further layer of film placed on top such a 30 µm gauge poly(ethylene) film. The air bubbles were rubbed out from the laminated package. The adhesive was supplied by Coim, NC250/CA350, and prepared according to the manufacturer's instructions and applied so as to achieve a final dry film weight of about 2.5 g. The laminates were then stored for about 10 to 14 days at 25 °C to ensure full cure of the isocyanate-based adhesive.

The resulting laminated package was cut into (15mm wide) strips for testing. The bond strength between coated plastic film and the subsequently adhered film using a conventional T-peel test was assessed. The test involved measuring the force in newtons (N) required to separate the two polymer films by pulling the two apart mechanically. The force required to break apart the laminates constructed with the functionalized polymers of the present invention was then compared with similar laminates made with unmodified and ketoester functionalized polymer backbone.

As will be described in more detail herein, three examples of polymer formulations, Examples A, B and C, are provided below. Coating formulations 1a/b, 2a/b, 3a/b, 4a/b, 5a/b, 6a/b and 7a/b include at least one of Examples A, B or C. Oxygen transmission rates as well as bond strength were tested using two substrates, Melinex S and 25MB400. Also provided are comparative examples 1a/b, 2a/b and 3a/b.

### Example A: Preparation of silane-functional EVOH #1

8.0g of RevBar DK6 (>97.5% solids (w/w) keto-ester functional EVOH supplied by Revolymer) was dissolved in a mixture of 25g of n-propanol and 67g of deionized water, by heating to 60°C. After 60 minutes, all the polymer had dissolved and the solution was allowed to cool to 22°C. With stirring, 2.16g of (3-aminopropyl)triethoxysilane was added and the mixture was stirred for 2 minutes. The mixture was then stored at 60°C for 12 days to ensure that the reaction between the pendant ketone groups on the polymer and primary amine of the silane had reached completion.

### Example B: Preparation of silane-functional EVOH #2

8.0g of RevBar DK8 (>97.5% solids w/w keto-ester functional EVOH supplied by Revolymer) was dissolved in a mixture of 25g of n-propanol and 67g of deionized water, by heating to 60°C. After 60 minutes, all the polymer had dissolved and the solution was allowed to cool to 22°C. With stirring, 2.88g of (3-aminopropyl)triethoxysilane was added and the mixture was stirred for 2 minutes. The mixture was then stored at 60°C for 12 days to ensure that the reaction between the pendant ketone groups on the polymer and primary amine of the silane had reached completion.

### Example C: Preparation of silane-functional EVOH #3

8.0g of RevBar DK8, a keto-ester functional EVOH supplied by Revolymer, was dissolved in a mixture of 25g of n-propanol and 67g of deionized water, by heating to 60°C. After 60 minutes, all the polymer had dissolved and the solution was allowed to cool to 22°C. With stirring, 2.52g of (3-aminopropyl)triethoxysilane was added and the mixture was stirred for 2 minutes. The mixture was then stored at 60°C for 12 days to ensure that the reaction between the pendant ketone groups on the polymer and primary amine of the silane had reached completion.

### Example 1: Preparation of a Gas Barrier Coating

5.6 grams of water was added to 27.6g of Example A, and then 16.8g of Microlite 963 (approx. 7.8% w/w solids aqueous dispersion of vermiculite supplied by W.R. Grace) was added thereto. The mixture was mixed using an Ultra Turrax T25 blender for 2 minutes. The coating was applied to a 12 micron gauge polyester film (Melinex S), at 6gsm (wet), and dried under a warm flow of air. The oxygen barrier of the coated film was measured to be 9.07 cm³/m²/day at 23°C and 80% relative humidity (the oxygen barrier of the uncoated PET film was measured at 105.6 cm³/m²/day). The coating was then applied to PET and OPP films and laminated to a PE film according to the procedure outlined above. Table 1 provides the results of the bond strength testing for Examples 1-7. At 50% RH and 23 °C, the OTR for the coated PET was less than 1.0 cm³/m²/day.

### Example 2: Preparation of a Gas Barrier Coating

5.6 g of water was added to 22.8 g of Example A, and then 21.6g of Microlite 963 was added thereto. The coating was prepared and tested in the same manner as Example 4. The oxygen barrier of the coated film was measured to be 7.60 cm³/m²/day at 23°C and 80% relative humidity. At 50% RH and 23 °C, the OTR for the coated PET was less than 1.0 cm³/m²/day.

### Example 3: Preparation of a Gas Barrier Coating

A mixture of 3.0 g of ethanol/water and 4.2 g of deionized water was added to 23.6 g of Example B, and then 19.2g of Microlite 963 was added thereto. The coating was prepared and tested in the same manner as Example 1. The oxygen barrier of the coated film was measured to be 6.63 cm³/m²/day at 23°C and 80% relative humidity. At 50% RH and 23 °C, the OTR for the coated PET was less than 1.0 cm³/m²/day.

### Example 4: Preparation of a Gas Barrier Coating

A mixture of 3.0 g of ethanol/water and 4.2 g of deionized water was added to 26.8g of Example C, and then 16.8g of Microlite 963 was added thereto. The coating was prepared and tested in the same manner as Example 1. The oxygen barrier of the coated film was measured to be 12.85 cm³/m²/day at 23°C and 80% relative humidity. At 50% RH and 23 °C, the OTR for the coated PET was less than 1.0 cm³/m²/day.

### Example 5: Preparation of a Gas Barrier Coating

A mixture of 3.0 g of ethanol/water and 3.1 g of deionized water was added to 24.7 g of Example 3 was, and then 19.2g of Microlite 963 was added thereto. The coating was prepared and tested in the same manner as Example 1. The oxygen barrier of the coated film was measured to be 7.90 cm³/m²/day at 23°C and 80% relative humidity. At 50% RH and 23 °C, the OTR for the coated PET was less than 1.0 cm³/m²/day.

### Example 6: Preparation of a Gas Barrier Coating

A mixture of 3.0 g of ethanol/water and 3.0 g of deionized water was added to 22.7 g of Example C, and then 21.6 g of Microlite 963 was added thereto. The coating was prepared and tested in the same manner as Example 1. The oxygen barrier of the coated film was measured to be 6.41 cm³/m²/day at 23 °C and 80% relative humidity. The oxygen barrier of this coated film was also measured at 23 °C and 50% and 75% relative humidity, and found to provide a barrier of 0.34 and 4.43 respectively.

### Example 7: Preparation of Gas Barrier Coating with Lower Aspect Ratio Clay

30.2 g of a 3.9% (w/w) dispersion of a bentonite clay dispersion (SunBar (SX012) O₂ Barrier 1.1 Part B; ex. Sun Chemical) was added to 19.8 g of Example B. The coating was prepared and tested in the same manner as Example 1. The oxygen barrier of the coated film was measured to be 72.31 cm³/m²/day at 23°C and 80% relative humidity. At 50% RH and 23°C, the OTR was less than 1cc/m2/day.
The oxygen barrier of this coated film was measured at 50% relative humidity, and found to provide a barrier of 0.95 cm³/m²/day.

### Comparative Example 1: Gas Barrier Coating w/o silane and w/o keto-ester

8.0 g of Exceval AQ4104, a PVOH supplied by Kuraray, was dissolved in a mixture of 25 g of n-propanol and 67 g of deionized water, and heated to 85°C. After 60 minutes, the polymer dissolved and the solution was allowed to cool to 22°C. A mixture of 3.0 g of ethanol and 3.0g of deionised water was added to 26.3 g of this solution, and then 17.9 g of Microlite 963 was added thereto. The coating was prepared and tested in the same manner as Example 1. The oxygen barrier of the coated film was measured to be 3.63 cm³/m²/day at 23°C and 80% relative humidity.

### Comparative Example 2: Gas Barrier Coating without silane and keto-ester and containing a lower aspect ratio clay

8.0 g of Exceval AQ4104, a PVOH supplied by Kuraray, was dissolved in a mixture of 25g of n-propanol and 67g of deionized water, and heated to 85°C. After 60 minutes, the polymer had dissolved and the solution was allowed to cool to 22°C. 29.0 g of a 3.9% (w/w) dispersion of a bentonite clay dispersion (SunBar (SX012) O2 Barrier 1.1 Part B; ex. Sun Chemical was added to 21.0 g of this solution. The coating was prepared and tested in the same manner as Example 1. The oxygen barrier of the coated film was measured to be 46.06 cm³/m²/day at 23°C and 80% relative humidity.

### Comparative Example 3: Gas Barrier Coating w/o silane

8.0 g of RevBar DK6, a keto-ester functional EVOH supplied by Revolymer, was dissolved in a mixture of 25 g of n-propanol and 67 g of deionized water, and heated to 60°C. After 60 minutes, all the polymer had dissolved and the solution was allowed to cool to 22°C. A mixture of 3.0 g ethanol and 4.0 g of deionised water was added to 19.5 g of this solution, and then 13.3g of Microlite 963 was added thereto. The coating was prepared and tested in the same manner as Example 1. The oxygen barrier of the coated film was measured to be 36.04 cm³/m²/day at 23°C and 80% relative humidity.

**Table 3**

| **Example** | **Substrate** | **Bond Strength (22°C, 45% RH) (N/15mm)** | **Bond Strength (38°C, 85-90% RH) (N/15mm)** | **Bond Strength (2 hr. water) immersion (N/15mm)** |
|---|---|---|---|---|
| 1a | Melinex S | 3.2 | 0.6 | 0.2¹ |
| 1b | 25MB400 | 3.3 | 0.8 | 1.4 |
| 2a | Melinex S | 3.3 | 0.4 | 0.3¹ |
| 2b | 25MB400 | 3.6 | 0.7 | 1.1 |
| 3a | Melinex S | 3.1 | 2.2 | 0.4¹ |
| 3b | 25MB400 | 3.5 | 3.5 | 1.6 |
| 4a | Melinex S | 3.1 | 2.9 | 0.6¹ |
| 4b | 25MB400 | 3.3 | 3.6 | 2.1 |
| 5a | Melinex S | 3.2 | 2.0 | - |
| 5b | 25MB400 | 3.1 | 3.2 | - |
| 6a | Melinex S | 3.0 | 2.8 | 0.3¹ |
| 6b | 25MB400 | 3.6 | 3.6 | 1.8 |
| 7a | Melinex S | 3.0 | 2.6 | 0.6¹ |
| 7b | 25MB400 | 3.6 | 2.4 | 0.6¹ |
| CE 1a | Melinex S | 0.3 | <0.1 | <0.1² |
| CE 1b | 25MB400 | 0.2 | <0.1 | <0.1² |
| CE 2a | Melinex S | 2.4 | 0.3 | <0.1² |
| CE 2b | 25MB400 | 0.3 | <0.1 | <0.1² |
| CE 3a | Melinex S | 0.2 | <0.1 | <0.1 |
| CE 3b | 25MB400 | 0.2 | <0.1 | <0.1 |

| | | | | |
|---|---|---|---|---|
| ¹When these laminates were allowed to dry for 6 hours at 22°C and 45%RH, the bond strengths recovered totally to that measured previously at 22°C and 45%RH. ²After being immersed in water, these laminates started to show signs of catastrophic failure, with the PE film becoming separated from either the PET or OPP coated films. | | | | |

The main contribution to the immersion bond strength performance is the starting concentration of ketoester, if the majority of this is subsequently reacted with aminosilane. The inventors prefer that the concentration of keto-ester is greater than 4.0 mol.% but less than 10 mol.%. We have achieved the best balance of oxygen barrier performance and bond strength performance with a sample of Exceval AQ4104 modified with between 4 and 7 mol.% of keto-ester and subsequently largely substituted with amino silane. If the keto-ester functional PVOHs are not modified with aminosilane then the subsequent bond strength, particularly at high humidity and after water immersion are poor (<0.5N/15mm). Equally, any significant levels of unreacted aminosilane cause flocculation of the vermiculite dispersion (ionic destabilization). This can be shown by adding small amounts of the aminosilane (APTEOS) to the vermiculite dispersion.

Examples 1a/b and 2a/b included the polymer RevBar DK6. These examples exhibited good oxygen barrier performance, at low humidity, *e*.*g*., 22 °C and 45% RH stored for 2 days, and high humidity, *e*.*g*., 28 °C and 85-90% RH stored for 1 day. Both examples exhibited good bond strength at lower humidity while marginal bond strength at higher humidity. Namely, 1a/b and 2a/b exhibited bond strengths of 3.2 N/15mm, 3.3 N/15mm, 3.3 N/15mm and 3.6 N/15mm, respectively. The bond strength at high humidity for Examples 1a/b and 2a/b were 0.6 N/15mm, 0.8 N/15 mm, 0.4 N/15mm and 0.7 N/15mm. Good bond strength also was exhibited for Examples 1b and 2b upon immersion of the Melinix S substrate in water for two hours followed by a 6-hour recovery.

Examples 3a/b & 5a/b included the polymer RevBar DK8. These examples exhibited good oxygen barrier performance at low and high humidity. These examples exhibited good bond strength performance was exhibited after water immersion as illustrated in **Table 3**.

Examples 4a/b included the polymer RevBar DK8 with a reduced amount of clay in relation to Examples 3a/b and 5a/b, and exhibited good oxygen barrier performance at low and high relative humidity. However, the instant results were not as favorable as those for examples 3a/b and 5a/b. As shown in **Table 3**, good bond strength performance was exhibited at low and high humidity. Good bond strength performance also was exhibited after water immersion for example 4b utilizing the Melinex S substrate.

Examples 6a/b included polymer Revbar DK8 with an increased amount of clay in relation to Examples 3a/b, 4a/b and 5a/b. Examples 6a/b exhibited good oxygen barrier performance at low and high humidity. As shown in **Table 3**, good bond strength performance was exhibited at low and high humidity. In addition, good bond strength performance was exhibited after water immersion for example 4b utilizing the Melinex S substrate.

Examples 7a/b included a coating including DK8 and a lower aspect ratio clay. The coatings exhibited good oxygen barrier performance at low humidity, however, oxygen barrier performance high relative humidity was not as favorable as Examples 1a/b-6a/b. Examples 7a/b exhibited good bond strength at low and high humidity as well as good bond strength upon water immersion.

Comparative Examples 1a/b included an oxygen barrier coating without silane and keto-ester. Examples 1a/b exhibited good oxygen barrier performance at low and high relative humidity. However, Comparative Examples 1a/b exhibited poor bond strength at low and high humidity and also when immersed in water as shown in **Table 3**.

Comparative Examples 2a/b included an oxygen barrier coating without silane and keto-ester and containing lower aspect ratio clay. Comparative Examples 2a/b exhibited poor oxygen barrier performance at high humidity. Comparative Example 2b did however exhibit good bond strength at low humidity. To the contrary, Comparative Example 2a exhibited poor bond strength at low humidity as shown in **Table 3**. Both examples exhibited poor bond strength at high humidity and water immersion characteristics.

Comparative Examples 3a/b included an oxygen barrier coating without silane. Comparative Examples 3a/b exhibited poor oxygen barrier performance at high relative humidity. Comparative Examples 3a/b exhibited poor bond strength at high and low humidity as well as poor water immersion characteristics as shown in **Table 3**.

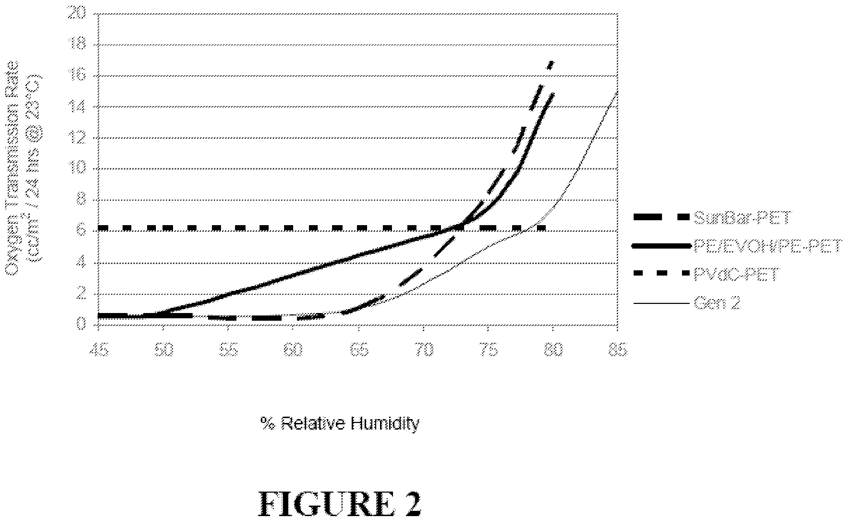

As shown in **Figure 2**, various the relative humidity of various polymers are examined upon storage for 24 hours at 23 °C. Gen 2 is the polymer according to the present invention. As illustrated, Gen 2 has the lowest OTR among the four tested samples at any given relative humidity between about 65 and 78%. At a relative humidity less than about 65%, Applicants' SunBar-PET has a comparable OTR. Example 6 is an example of Gen 2. Gen 2 is depicted as a thin solid line in **Figure 2**. SunBar-PET is a 12 micron PET film coated with a 6 micron wet film of SunBar (SX011-SX012) O₂ barrier coating prepared according to the manufacturer's instructions. SunBar-PET is depicted as thick dashed line in **Figure 2**. PE/EVOH/PE-PET is an adhesively-formed laminate of a 12 micron PET film laminated to a 3-ply co-extruded film of PE, EVOH and PE where the EVOH layer thickness is of the order 3-5 microns and the total thickness of the triple ply film is of the order of 50-60 microns. PE/EVOH/PE-PET is depicted as a thick solid line in **Figure 2**. Lastly, PVdC-PET is a 12 micron PET film having an approximately 3 micron thick coating of PVdC. PVdC-PET is depicted as a think dashed line in **Figure 2**.

The present invention has been described in detail, including the preferred embodiments thereof.

## Claims

1. An ink or coating composition comprising an inorganic filler and a functionalized homopolymer or copolymer of vinyl alcohol according to the formula:
P-(R)ₙ
wherein 'P' comprises a straight or branched chain polymer backbone comprising a homopolymer of vinyl alcohol, or copolymer of vinyl alcohol and at least one other monomer, and a reactive coupling group comprising a ketone- or ketoester-containing functional group,
wherein 'R' comprises an aminosilane- and/or aminosilanol-containing side chain attached to said polymer backbone via said reactive coupling group,
wherein 'n' is the number of side chains ranging from 1 to 25 mol% of said polymer backbone, and
wherein 30% to 95% (w/w) of the total solids content is the functionalized polymer.

2. The ink or coating composition according to claim 1, wherein the ketone- or ketoester-containing functional group is present in an amount from 1 to 50 mol% of the polymer backbone.

3. The ink or coating composition according to claim 1 or 2, wherein the ketoester-containing functional group is derived from an acetoacetylation agent selected from a diketene, diketene acetone adduct, methyl acetoacetate, ethyl acetoacetate, tert-butyl acetoacetate, tert-pentyl acetoacetate and combinations thereof.

4. The ink or coating composition according to any one of the preceding claims,
wherein said copolymer side chain R is derived from a compound according to the formula: 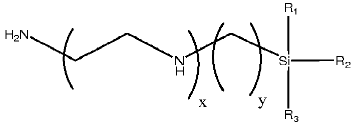
wherein R₁, R₂ and R₃ is selected from H, C₁₋₉ alkyl, aryl, and C₁₋₉ alkoxy or aryloxy,
wherein at least one of R₁, R₂ or R₃ is C₁₋₉ alkoxy or aryloxy group, and
wherein x is 0 to 9, and y is 1 to 9, and/or
wherein said side chain R is 2 to 15 mol% of the polymer backbone.

5. The ink or coating composition according to claim 4, wherein the side chain R is derived from a compound selected from 3-aminopropyl trimethoxysilane, 3-aminopropyl triethoxysilane, N-(2-Aminoethyl)-3-aminopropyl trimethoxysilane, N-(2-Aminoethyl)-3-aminopropyl triethoxysilane, 3-[2-(2-aminoethylamino)ethylamino]propyl trimethoxysilane, 3-[2-(2-aminoethylamino)ethylamino]propyl triethoxysilane 3-aminopropyl methyldimethoxysilane and combinations thereof.

6. The ink or coating composition according to any one of the preceding claims, wherein the side chain R is 50 to 150 mol% relative to an amount of said reactive coupling.

7. The ink or coating composition according to any one of the preceding claims, wherein a weight % ratio of said aminosilane to said keto-ester reactive coupled vinyl copolymer or homopolymer ranges from 1:2 to 1:100.

8. The ink or coating composition according to any one of the preceding claims, wherein said monomer is selected from olefins, vinylic monomers, acetoacetoxyethyl methacrylates, diacetone acrylamides and combinations thereof, and wherein said olefin is optionally 1 to 50 mol% of said polymer backbone, for example, less than 20 mol% of said polymer backbone.

9. The ink or coating composition according to any one of the preceding claims, wherein the inorganic filler is a clay, for example, a vermiculite.

10. The ink or coating composition according to claim 9, wherein a total solids content of the composition ranges from 0.5 to 15% (w/w), wherein the inorganic filler is a clay and said clay optionally ranges from 30 to 55% (w/w) of the total solids content of said composition.

11. The ink or coating composition according to claim 9 or claim 10, exhibiting an oxygen transmission rate less than 13 cm³/m²/day at 23 °C and 80% relative humidity, and/or exhibiting an oxygen transmission rate less than 1 cm³/m²/day at 23 °C and 50% relative humidity.

12. A cured laminate package comprising:
at least one thermoplastic film substrate;
an adhesive; and
the coating composition according to any of claims 9 to 11.

13. The cured laminate package according to claim 12, exhibiting a laminate bond strength greater than 3.0 N/15 mm after being stored for 48 hours at 38 °C and 85-90% relative humidity, and/or exhibiting a laminate bond strength greater than 0.5 N/15 mm after being stored for 24 hours at 38 °C and 85-90% relative humidity, and/or exhibiting a laminate bond strength greater than 0.6 N/15 mm after immersion in water for 2 hours at 22 °C.

14. Use of the ink or coating composition according to any one of claims 1-11 as gas barriers in modified atmosphere packaging for food and industrial applications.

15. A functionalized homopolymer or copolymer of vinyl alcohol as defined in any one of claims 1 to 8 for use in inks or coatings.

## Patentansprüche

1. Eine Tinten- oder Beschichtungszusammensetzung, umfassend einen anorganischen Füllstoff und ein funktionalisiertes Vinylalkohol-Homopolymer oder -Copolymer gemäß der Formel:
P-(R)ₙ,
worin 'P' ein gerad- oder verzweigtkettiges Polymerrückgrat, welches ein Vinylalkohol-Homopolymer oder ein Copolymer aus Vinylalkohol und wenigstens einem anderen Monomer umfasst, und eine reaktive Kupplungsgruppe, welche eine Keton oder Ketoester enthaltende funktionelle Gruppe umfasst, umfasst,
worin 'R' eine Aminosilan- und/oder Aminosilanol enthaltende Seitenkette umfasst, die durch die reaktive Kupplungsgruppe an das Polymerrückgrat gebunden ist,
worin 'n' die Zahl der Seitenketten bedeutet, welche von 1 bis 25 Mol-% des Polymerrückgrats reichen, und
wobei das funktionalisierte Polymer 30% bis 95% (Gew./Gew.) des Gesamtfeststoffgehalts ausmacht.

2. Die Tinten- oder Beschichtungszusammensetzung gemäß Anspruch 1, wobei die Keton oder Ketoester enthaltende funktionelle Gruppe in einer Menge von 1 bis 50 Mol-% des Polymerrückgrats vorliegt.

3. Die Tinten- oder Beschichtungszusammensetzung gemäß Anspruch 1 oder 2, wobei die Ketoester enthaltende funktionelle Gruppe von einem Acetoacetylierungsmittel abgeleitet ist, ausgewählt aus einem Diketen, Diketen-Aceton-Addukt, Methylacetoacetat, Ethylacetoacetat, tert-Butylacetoacetat, tert-Pentylacetoacetat und Kombinationen davon.

4. Die Tinten- oder Beschichtungszusammensetzung gemäß einem der vorhergehenden Ansprüche,
wobei die Copolymer-Seitenkette R von einer Verbindung gemäß der Formel: 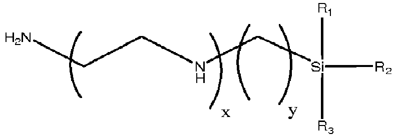 abgeleitet ist,
worin R₁, R₂ und R₃ ausgewählt sind aus H, C₁₋₉-Alkyl, Aryl und C₁₋₉-Alkoxy oder Aryloxy,
worin wenigstens einer der Reste R₁, R₂ oder R₃ eine C₁₋₉-Alkoxy- oder Aryloxygruppe ist, und
worin x 0 bis 9 ist und y 1 bis 9 ist, und/oder
worin die Seitenkette R 2 bis 15 Mol-% des Polymerrückgrats ist.

5. Die Tinten- oder Beschichtungszusammensetzung gemäß Anspruch 4, wobei die Seitenkette R abgeleitet ist von einer Verbindung, ausgewählt aus 3-Aminopropyltrimethoxysilan, 3-Aminopropyltriethoxysilan, N-(2-Aminoethyl)-3-aminopropyltrimethoxysilan, N-(2-Aminoethyl)-3-aminopropyltriethoxysilan, 3-[2-(2-Aminoethylamino)ethylamino]propyltrimethoxysilan, 3-[2-(2-Aminoethylamino)ethylamino]propyltriethoxysilan, 3-Aminopropylmethyldimethoxysilan und Kombinationen davon.

6. Die Tinten- oder Beschichtungszusammensetzung gemäß einem der vorhergehenden Ansprüche, wobei die Seitenkette R 50 bis 150 Mol-% ist, bezogen auf eine Menge der reaktiven Kupplung.

7. Die Tinten- oder Beschichtungszusammensetzung gemäß einem der vorhergehenden Ansprüche, wobei ein Gewichts-%-Verhältnis des Aminosilans zum Ketoester-reaktiven gekuppelten Vinylcopolymer oder -homopolymer von 1:2 bis 1:100 reicht.

8. Die Tinten- oder Beschichtungszusammensetzung gemäß einem der vorhergehenden Ansprüche, wobei das Monomer ausgewählt ist aus Olefinen, Vinylmonomeren, Acetoacetoxyethylmethacrylaten, Diacetonacrylamiden und Kombinationen davon, und wobei das Olefin gegebenenfalls 1 bis 50 Mol-% des Polymerrückgrates ist, zum Beispiel weniger als 20 Mol-% des Polymerrückgrates.

9. Die Tinten- oder Beschichtungszusammensetzung gemäß einem der vorhergehenden Ansprüche, wobei der anorganische Füllstoff ein Ton ist, zum Beispiel ein Vermiculit.

10. Die Tinten- oder Beschichtungszusammensetzung gemäß Anspruch 9, wobei ein Gesamtfeststoffgehalt der Zusammensetzung von 0,5 bis 15% (Gew./Gew.) reicht, wobei der anorganische Füllstoff ein Ton ist und der Ton gegebenenfalls von 30 bis 55% (Gew.-/Gew.) des Gesamtfeststoffgehalts der Zusammensetzung reicht.

11. Die Tinten- oder Beschichtungszusammensetzung gemäß Anspruch 9 oder Anspruch 10, die eine Sauerstoffdurchlässigkeitsrate von weniger als 13 cm³/m²/Tag bei 23°C und 80% relativer Feuchtigkeit aufweist und/oder eine Sauerstoffdurchlässigkeitsrate von weniger als 1cm³/m²/Tag bei 23°C und 50% relativer Feuchtigkeit aufweist.

12. Eine gehärtete Laminatpackung, umfassend:
wenigstens ein thermoplastisches Filmsubstrat,
einen Klebstoff und
die Beschichtungszusammensetzung gemäß einem der Ansprüche 9 bis 11.

13. Die gehärtete Laminatpackung gemäß Anspruch 12, die eine Laminatverbundfestigkeit von mehr als 3,0 N/15 mm nach 48-stündiger Lagerung bei 38°C und 85-90% relativer Feuchtigkeit aufweist und/oder eine Laminatverbundfestigkeit von mehr als 0,5 N/15 mm nach 24-stündiger Lagerung bei 38°C und 85-90% relativer Feuchtigkeit aufweist und/oder eine Laminatverbundfestigkeit von mehr als 0,6 N/15 mm 2-stündigem Eintauchen in Wasser bei 22°C aufweist.

14. Verwendung der Tinten- oder Beschichtungszusammensetzung gemäß einem der Ansprüche 1-11 als Gasbarrieren bei der Verpackung mit modifizierter Atmosphäre für Lebensmittel- und industrielle Anwendungen.

15. Ein funktionalisiertes Vinylalkohol-Homopolymer oder -Copolymer wie in einem der Ansprüche 1 bis 8 definiert zur Verwendung in Tinten oder Beschichtungen.

## Revendications

1. Composition d'encre ou de revêtement comprenant une charge inorganique et un homopolymère ou un copolymère fonctionnalisé d'alcool vinylique répondant à la formule :
P-(R)ₙ
dans laquelle « P » comprend un squelette de polymère à chaîne linéaire ou ramifiée comprenant un homopolymère d'alcool vinylique, ou un copolymère d'alcool vinylique et au moins un autre monomère, et un groupe de couplage réactif comprenant un groupe fonctionnel contenant une cétone ou un céto-ester,
dans laquelle « R » comprend une chaîne latérale contenant un aminosilane et/ou un aminosilanol attachée audit squelette de polymère par l'intermédiaire dudit groupe de couplage réactif,
dans laquelle « n » est le nombre de chaînes latérales se situant dans la plage de 1 à 25 % en mol dudit squelette de polymère, et
dans laquelle de 30 % à 95 % (en p/p) de la teneur totale en matières solides est le polymère fonctionnalisé.

2. Composition d'encre ou de revêtement selon la revendication 1, dans laquelle le groupe fonctionnel contenant une cétone ou un céto-ester est présent en une quantité de 1 à 50 % en mol du squelette de polymère.

3. Composition d'encre ou de revêtement selon la revendication 1 ou 2, dans laquelle le groupe fonctionnel contenant un céto-ester est dérivé d'un agent d'acétoacétylation choisi parmi un dicétène, un adduit dicétène-acétone, l'acétoacétate de méthyle, l'acétoacétate d'éthyle, l'acétoacétate de tert-butyle, l'acétoacétate de tert-pentyle et les combinaisons de ceux-ci.

4. Composition d'encre ou de revêtement selon l'une quelconque des revendications précédentes,
dans laquelle ladite chaîne latérale R du copolymère est dérivée d'un composé répondant à la formule : 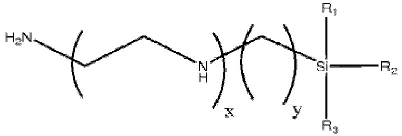
dans laquelle R₁, R₂ et R₃ sont choisis parmi un H, un alkyle en C₁ à C₉, un aryle, et un alcoxy ou un aryloxy en C₁ à C₉,
dans laquelle au moins l'un de R₁, R₂ ou R₃ est un groupe alcoxy ou aryloxy en C₁ à C₉, et
dans laquelle x vaut de 0 à 9, et y vaut de 1 à 9, et/ou
dans laquelle ladite chaîne latérale R représente de 2 à 15 % en mol du squelette de polymère.

5. Composition d'encre ou de revêtement selon la revendication 4, dans laquelle la chaîne latérale R est dérivée d'un composé choisi parmi le 3-aminopropyl triméthoxysilane, le 3-aminopropyl triéthoxysilane, le N-(2-aminoéthyl)-3-aminopropyl triméthoxysilane, le N-(2-aminoéthyl)-3-aminopropyl triéthoxysilane, le 3-[2-(2-aminoéthylamino)éthylamino]propyl triméthoxysilane, le 3-[2-(2-aminoéthylamino)éthylamino]propyl triéthoxysilane, le 3-aminopropyl méthyldiméthoxysilane et les combinaisons de ceux-ci.

6. Composition d'encre ou de revêtement selon l'une quelconque des revendications précédentes, dans laquelle la chaîne latérale R représente de 50 à 150 % en mol par rapport à une quantité dudit couplage réactif.

7. Composition d'encre ou de revêtement selon l'une quelconque des revendications précédentes, dans laquelle un rapport en % pondéral dudit aminosilane audit copolymère ou homopolymère de vinyle couplé au groupe réactif contenant un céto-ester se situe dans la plage de 1/2 à 1/100.

8. Composition d'encre ou de revêtement selon l'une quelconque des revendications précédentes, dans laquelle ledit monomère est choisi parmi les oléfines, les monomères vinyliques, les méthacrylates d'acétoacétoxyéthyle, les acrylamides de diacétone et les combinaisons de ceux-ci, et dans laquelle ladite oléfine représente facultativement de 1 à 50 % en mol dudit squelette de polymère, par exemple, moins de 20 % en mol dudit squelette de polymère.

9. Composition d'encre ou de revêtement selon l'une quelconque des revendications précédentes, dans laquelle la charge inorganique est une argile, par exemple, une vermiculite.

10. Composition d'encre ou de revêtement selon la revendication 9, dans laquelle une teneur totale en matières solides de la composition se situe dans la plage de 0,5 à 15 % (en p/p), dans laquelle la charge inorganique est une argile et ladite argile se situe facultativement dans la plage de 30 à 55 % (en p/p) de la teneur totale en matières solides de ladite composition.

11. Composition d'encre ou de revêtement selon la revendication 9 ou la revendication 10, présentant un taux de transmission d'oxygène inférieur à 13 cm³/m²/jour à 23 °C et à une humidité relative de 80 %, et/ou présentant un taux de transmission d'oxygène inférieur à 1 cm³/m²/jour à 23 °C et à une humidité relative de 50 %.

12. Emballage stratifié durci comprenant :
au moins un substrat en film thermoplastique ;
un adhésif ; et
la composition de revêtement selon l'une quelconque des revendications 9 à 11.

13. Emballage stratifié durci selon la revendication 12, présentant une résistance d'adhésion du stratifié supérieure à 3,0 N/15 mm après avoir été stocké pendant 48 heures à 38 °C et à une humidité relative de 85 à 90 %, et/ou présentant une résistance d'adhésion du stratifié supérieure à 0,5 N/15 mm après avoir été stocké pendant 24 heures à 38 °C et à une humidité relative de 85 à 90 %, et/ou présentant une résistance d'adhésion du stratifié supérieure à 0,6 N/15 mm après immersion dans l'eau pendant 2 heures à 22 °C.

14. Utilisation de la composition d'encre ou de revêtement selon l'une quelconque des revendications 1 à 11 en tant que barrières contre les gaz dans un emballage à atmosphère modifiée pour des applications alimentaires et industrielles.

15. Homopolymère ou copolymère fonctionnalisé d'alcool vinylique selon l'une quelconque des revendications 1 à 8 pour une utilisation dans des encres ou des revêtements.
